(19) Europäisches Patentamt
European Patent Office
Office européen des brevets

(11) **EP 4 752 764 A1**

(12) **EUROPEAN PATENT APPLICATION**

(43) Date of publication:
**03.06.2026 Bulletin 2026/23**

(21) Application number: **25213944.9**

(22) Date of filing: **06.11.2025**

(51) International Patent Classification (IPC):
**G06F 21/50** (2013.01)　　**G06F 21/55** (2013.01)
**G06F 40/205** (2020.01)　　**H04L 9/40** (2022.01)

(52) Cooperative Patent Classification (CPC):
**G06F 21/554; G06F 21/50; G06F 21/552;
G06F 40/205; H04L 63/1416; H04L 63/1425**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.11.2024 US 202418964223**

(71) Applicant: **Microsoft Technology Licensing, LLC
Redmond, WA 98052-6399 (US)**

(72) Inventors:
• **VINAY, Vaishali
  Redmond, 98052-6399 (US)**
• **MANGAL, Anjali
  Redmond, 98052-6399 (US)**

(74) Representative: **Page White Farrer
Bedford House
21a John Street
London WC1N 2BF (GB)**

(54) **ANOMALY DETECTION ENGINE IN A SECURITY MANAGEMENT SYSTEM**

(57)　Methods, systems, and computer storage media for providing anomaly detection using an anomaly detection engine of a security management system are described. The anomaly detection engine supports anomaly detection that refers to the process of identifying command-line activities that deviate from established patterns of normal behavior within a large-scale environment, such as data centers. The anomaly detection engine operates based on an advanced framework specifically designed to enhance the security of large-scale environments by detecting anomalous and potentially malicious command-line activities. By integrating global and local context analysis, employing efficient data filtering and distributed computing, and leveraging advanced models for pattern recognition, the anomaly detection engine provides a scalable approach to anomaly detection. Operationally, the anomaly detection engine can be implemented as based on a dual-layer detection architecture, use of statistical models in command-line analysis, granular and context n-gram tokenization, adaptable anomaly scoring and thresholding, scalability, and continuous compliance monitoring.

FIG. 2A

**Description**

**BACKGROUND**

Users rely on computing environments with applications and services to accomplish computing tasks. Distributed computing systems host and support different types of applications and services in managed computing environments. In particular, computing environments can implement a security management system that provides security configuration management functionality and supports threat protection in the computing environments. For example, Endpoint Detection and Response (EDR) solutions can be implemented for data centers to provide continuous monitoring and analysis of endpoints (servers, workstations, etc.) to detect, investigate, and respond to security threats in real-time. These solutions help identify suspicious activity, track changes, and mitigate potential risks by analyzing endpoint behavior, blocking malicious actions, and providing detailed forensic data for incident response. EDR solutions enhance security by offering threat detection, automated response, and advanced analytics tailored to the specific needs of data center environments.

**SUMMARY**

Various aspects of the technology described herein are generally directed to systems, methods, and computer storage media for, among other things, providing anomaly detection using an anomaly detection engine of a security management system. The anomaly detection engine operates based on advanced framework designed to enhance the security of large-scale environments by detecting anomalous and potentially malicious command-line activities. The anomaly detection engine supports anomaly detection that refers to the process of identifying command-line activities that deviate from established patterns of normal behavior within a large-scale environment, such as data centers. By integrating global analysis and local analysis, employing efficient data filtering and distributed computing, and leveraging advanced models for pattern recognition, the anomaly detection engine provides a scalable approach to anomaly detection. Operationally, the anomaly detection engine can be implemented based on a dual-layer detection architecture, use of statistical models in command-line analysis, granular and context n-gram tokenization, adaptable anomaly scoring and thresholding, scalability, and continuous compliance monitoring.

Conventional security management systems are not configured with comprehensive computing logic and infrastructure to support anomaly detection for large-scale computing environments - such as data centers. The security of data centers is important, given that they host a vast array of sensitive applications and services essential for modem enterprises. As data centers continue to expand, the complexity and volume of their command-line activities also grow, posing unique challenges for security teams. In traditional environments, threat detection often depends on labeled data to train/validate machine learning models or apply heuristic rules. However, for data centers, the diversity of command-line activities, the prevalence of benign but unusual tasks, and the lack of labeled malicious data make it difficult for conventional methods to identify true threats effectively.

A typical workaround in scenarios without labeled data is to have human analysts label a few sample anomalies. While this can be helpful, it is neither scalable nor sufficient for the evolving threat landscape. Attack patterns and tactics can change rapidly, and security solutions need to adapt in real-time to remain effective. Furthermore, since data centers often lack real threat campaign data, static or human-driven labeling approaches fall short of achieving high detection accuracy.

Consider a large cloud services provider with a data center that hosts applications for numerous enterprises. The security team faces challenges as the data center handles an enormous volume of diverse command-line activities-from routine database queries to automated system maintenance tasks. Some of these commands may seem unusual but are actually benign, such as long-running backup jobs or reboots scheduled during low traffic hours.

In a traditional security setup, the team could use machine learning models trained on labeled data-where known malicious behaviors are clearly marked. However, for this data center, there's a scarcity of labeled examples of true threats because attacks are rare, constantly evolving, and often new to the environment. To work around this, security analysts manually tag a few suspicious behaviors-like commands attempting to access sensitive databases outside normal hours.

Yet, this manual labeling process has limitations. It's slow, labor-intensive, and incapable of keeping up with the rate at which new attack tactics emerge. Moreover, the evolving nature of threats makes static labels ineffective. For example, an attack might use an unusual command that is not yet categorized as "malicious" by the security model, or it might look benign, but, over time, it could be part of a larger attack campaign. Thus, while human-driven labeling helps initially, it's not scalable for a dynamic, high-volume environment like a modem data center, where security models must continuously adapt to detect emerging threats.

A technical solution - to the limitations of conventional security management systems - can include the challenge of addressing the absence of labeled data, performance overhead, the ubiquity of command-line tools, and the complexity of command-lines. An anomaly detection engine can be provided to proactively identify and mitigate potential security threats by continuously monitoring and analyzing command-line activities, ensuring the security and integrity of the data center environment. The anomaly detection engine operates to detect command-line entries that significantly differ from the baseline of typical activities, which could indicate potential security threats or malicious actions. Statistical models, such as BM25 and Log Entropy, are employed to assess the rarity and significance of command-lines, helping to identify unusual patterns that may not be immediately apparent. Command-line activities are analyzed in both global and local contexts, considering overall behavioral patterns across the data center as well as specific user and asset behaviors to detect anomalies. Detection thresholds are dynamically adjusted based on real-time data to classify anomalies into different severity levels, reducing false positives and negatives by calibrating sensitivity according to recent activity patterns. Various factors, including execution frequency, asset usage, and user behavior, are combined to score anomalies, enhancing the accuracy of detecting true anomalies.

In operation, in a first embodiment, command-line data associated with a first command-line is accessed. An anomaly score is generated for the first command-line. The anomaly score quantifies unusual characteristics of the first command-line. A local context associated with the first command-line is determined based on historical execution data corresponding to the first command-line, the user executing it, and the asset on which it is executed. Based on the anomaly score and the local context, a security insight for first command-line is generated. The security insight is communicated to a security management client.

In a second embodiment, command-line data associated with a plurality of command-lines is accessed. The command-line data is associated with a computing environment. A plurality of global analysis operations are executed to flag anomalies associated with the computing environment. A plurality of local analysis operations are executed to differentiate benign positive command-lines from true positive command-lines. Based on executing the plurality of global analysis operations and the plurality of local analysis, one or more security insights are generated. The one or more security insights are communicated to a security management client.

In a third embodiment, a plurality of flagged payload items associated with corresponding global analysis results and local analysis results is accessed. Based on corresponding global analysis results and local analysis results, classifications are generated for the flagged payload items. The classifications are selected from the following: True Positives (TP), Benign Positives (BP), or Legitimate Commands (LC). The flagged payload items are communicated based on workflows associated with the classifications.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

## BRIEF DESCRIPTION OF THE DRAWINGS

The technology described herein is described in detail below with reference to the attached drawing figures, wherein:

FIGS. 1A and 1D are block diagrams of an exemplary security management system including an anomaly detection engine, in accordance with aspects of the technology described herein;

FIGS. 2A and 2B are block diagrams of an exemplary security management system including an anomaly detection engine, in accordance with aspects of the technology described herein;

FIG. 3 provides a first exemplary method of providing anomaly detection using an anomaly detection engine, in accordance with aspects of the technology described herein;

FIG. 4 provides a second exemplary method of providing anomaly detection using an anomaly detection engine, in accordance with aspects of the technology described herein;

FIG. 5 provides a third exemplary method of providing anomaly detection using an anomaly detection engine, in accordance with aspects of the technology described herein;

FIG. 6 provides a block diagram of an exemplary security management system suitable for use in implementing aspects of the technology described herein;

FIG. 7 provides a block diagram of an exemplary distributed computing environment suitable for use in implementing aspects of the technology described herein; and

FIG. 8 is a block diagram of an exemplary computing environment suitable for use in implementing aspects of the technology described herein.

## DETAILED DESCRIPTION

### OVERVIEW

A security management system supports management of security aspects of data, resources, and workloads in computing environments. The security management system can help enable protection against threats, help reduce risk across different types of computing environments, and help strengthen a security posture of computing environments (i.e., security status and remediation-action recommendations for computing resources including networks and devices). For example, the security management system can provide real-time security alerts, centralize insights for different resources, and provide for preventative protection, post-breach detection, and automated investigation, and response. The security management system can further enhance security by offering threat detection, automated response, and advanced analytics tailored to the specific needs of data center environments.

Conventional security management systems are not configured with a comprehensive computing logic and infrastructure to effectively provide anomaly detection for data centers. Data center security is an important aspect of security management because data centers host sensitive applications and services for enterprises. The increasing complexity and volume of command-line activities in data centers make it challenging for security teams to detect threats. Traditional methods rely on labeled data for machine learning models, but the diversity of tasks and lack of labeled malicious data in data centers hinder effective threat detection. While human analysts can label a few anomalies, this approach is slow, labor-intensive, and unable to keep up with rapidly evolving threats. Static labels are ineffective, as new attack tactics may not be immediately recognized. Thus, manual labeling is not scalable for data centers, requiring adaptive, real-time security solutions.

By way of context, endpoint detection and response (EDR) solutions have conventionally been deployed to secure servers in data centers, where EDR employs both heuristic rule-based detectors and machine learning (ML)-based detectors. Despite the scale and effort involved, the signal-to-noise ratio (SNR) of these solutions remained below 10%, rendering them ineffective. One of the main challenges with EDR solutions was the dependence of conventional ML-based detectors on labeled data for training and validation, which was difficult to obtain in data centers due to the lack of malicious samples. Additionally, the threat landscape in data centers differs significantly from that of typical client environments. Data centers often run tools and commands, such as certutil for certificate management, which would trigger alerts in endpoint environments but might be legitimate administrative tasks in the data center. This led to difficulties in distinguishing between malicious and legitimate usage, resulting in a high rate of false positives.

Another issue is the increasing use of 'living off the land' (LOTL) attacks, where attackers exploit built-in system tools instead of installing malicious files. These attacks are harder to detect, as they mimic normal system behavior and can remain undetected for long periods until the attacker is ready to strike. Furthermore, earlier EDR solutions were inflexible and lacked the adaptability required for dynamic environments. They were unable to learn and adjust in real-time based on new telemetry or evolving threats, which further limited their effectiveness in the ever-changing data center security landscape. As such, a comprehensive security management system - with an alternative basis for performing anomaly detection- can improve computing operations and interfaces in security management systems.

## DESCRIPTION OF TECHNICAL SOLUTION

At a high level, the anomaly detection engine is provided as a Scalable Anomalous Command-Line Detection Engine (SCADE) offering an innovative, adaptive framework that autonomously analyzes command-line activities and flags anomalies without relying on labeled data. By integrating dynamic thresholds, rarity scoring, and local behavioral baselines, SCADE can differentiate between legitimate commands, unusual but benign commands and true malicious commands in complex environments. This approach ensures high detection precision and reduces the need for human intervention, keeping pace with emerging threats and minimizing operational overhead.

The following terms provide a framework to understand the technical solution behind an anomaly detection engine. This anomaly detection engine operates based on advanced framework designed to enhance the security of large-scale environments by detecting anomalous and potentially malicious command-line activities.

SCADE (Scalable Anomalous Command-Line Detection Engine): A specialized framework for detecting anomalies in command-line activities within a computing environment. SCADE combines global analysis (broad, statistical detection of unusual patterns) and local analysis (context-specific validation using historical data) to ensure precise and actionable detection. SCADE not only identifies potential security threats but also integrates feedback mechanisms to refine detection criteria, providing an evolving and adaptive defense mechanism.

Anomaly Detection Engine: The central component of SCADE that integrates data pre-processing, global analysis, local analysis, and result combination. It also supports triage workflows, alert generation, and continuous model tuning.

Command-Line: A specific instance of a command that has been run in a computing environment, including its associated parameters, arguments, and metadata such as the user, asset, and process details.

Command-Line Data: Structured information captured from executed command lines (e.g., command-line activity). This includes parameters (e.g., file paths, flags), arguments (input data), and metadata (e.g., user, asset, timestamp). SCADE processes command-line data to generate payload items, which are then analyzed for anomalies based on both global and local factors.

Command-Line Contextual Factors: Attributes and behaviors associated with the execution of a command-line, which provide contextual information for anomaly detection. These factors include: user activity: the identity and historical behavior patterns of the user executing the command; asset usage: the specific machine or system on which the command-line is executed and its historical usage trends; execution frequency: how often a particular command-line is executed within a given time frame; command parameters: arguments or options included in the command-line that define its functionality; process relationships: the hierarchy or connections between the command-line process and its parent and child processes; and historical patterns: baseline behaviors derived from past data, indicating what is considered normal for the user or asset or command-line.

Payload Item: A composite data entity derived from a command-line. It includes fields such as the process name, user identifier, asset identifier, execution timestamp, and parent-child process relationships. By concatenating these attributes, SCADE creates a unique, structured input for its analysis engine. Payload items enable systematic anomaly detection by serving as the unit of analysis.

Global Analysis: A preliminary phase in the anomaly detection process that evaluates command-line data using a short-term historical window (e.g., two days) to identify unusual patterns. This phase leverages techniques such as 1-gram and 2-gram tokenization along with text weighting functions like Log Entropy and ranking models like BM25, it flags unusual patterns, including rare parameters or suspicious combinations. This phase also employs statistical analysis, identifying deviations based on metrics like mean and standard deviation, and applies dynamic threshold selection to categorize anomalies by severity.

1-Gram and 2-Gram Tokenization: Techniques for breaking down command-line data into single tokens (1-grams) or token pairs (2-grams). These help identify unusual or rare parameters and combinations, which are strong indicators of potential anomalies.

BM25 (Best Matching 25): A statistical ranking algorithm adapted for command-line analysis. It assigns scores to token pairs (e.g., parameters combinations) based on their frequency and importance. Rare combinations receive higher scores, making BM25 effective at highlighting potentially suspicious patterns.

Log Entropy: A weight calculation method that measures the rarity and importance of individual parameters within command-line data. Tokens that occur less frequently in a dataset receive higher weights, emphasizing their potential relevance as anomalies.

Dynamic Threshold Selection: A technique for adaptively determining thresholds that classify anomaly scores into high, medium, or low severity. By analyzing statistical properties such as mean and standard deviation, this method adjusts thresholds to suit evolving datasets and reduces false positives.

Statistical Properties (Mean, Standard Deviation): Metrics used to summarize anomaly score distributions, enabling the classification of anomalies based on their deviation from the mean.

Anomaly Score: A quantitative value assigned to a command-line to indicate its relative "unusualness" based on global analysis techniques. Calculated using methods like BM25 and Log Entropy, the anomaly score represents the degree to which a command-line deviates from expected patterns. This score helps prioritize which anomalies are sent for local analysis.

Local Analysis: A subsequent phase of the anomaly detection process that incorporates contextual and historical data to refine detection results. It examines metrics such as command-line execution frequency, asset-specific command patterns, and user behavior trends to build a local context. Advanced techniques like isolation forests which leverage multi-factor anomaly scoring, are used to analyze flagged items, ensuring that benign positives are distinguished from true threats.

Historical data: Previous command-line activities, system behaviors, user actions, or other relevant metrics used to establish baselines for comparison and identify deviations from normal patterns.

Historical Baseline: A dataset summarizing past command-line activities to establish normal behavior patterns. Baselines evolve over time to reflect changes in user or asset behavior.

Local Context: A profile of typical behavior associated with a command-line, user, or asset. Derived from historical usage data, local context includes metrics such as daily execution counts of command-line across all users and assets, daily execution counts for the user executing the particular command-line and the daily execution count of asset executing the particular command-line. Local context helps validate whether flagged anomalies represent genuine threats or are consistent with prior legitimate activities.

Multi-Factor Anomaly Scoring: An Isolation Forest model based approach that evaluates flagged payload items using multiple metrics simultaneously (e.g., frequency and user-asset execution patterns). By combining these factors, SCADE enhances the accuracy of anomaly classification, helping to differentiate between benign deviations and actual threats.

Security Insight: A detailed observation derived from anomaly detection processes. Security insights include classifications (e.g., TP, BP, LC), associated risk levels, and explanation of top factors contributing to anomaly. Based on security insights, security teams can conduct investigations and take remediation actions.

True Positive (TP): An anomaly confirmed to be malicious, unauthorized, or indicative of a security breach. These require immediate investigation and remediation.

Benign Positive (BP): An anomaly that appears unusual but aligns with expected, legitimate patterns (e.g., a maintenance script or an authorized test activity run by an administrator). These are reviewed for compliance or logged for future reference.

Legitimate Command (LC): A command-line activity consistent with typical user or asset behavior. Classified as normal, these are discarded from further analysis to reduce noise.

Workflow: A sequence of steps or actions taken after a flagged payload item or command-line is classified by the anomaly detection framework. Once the classification is made-whether True Positive, Benign Positive, or Legitimate Command-the workflow outlines how the flagged payload item or command-line is processed. These workflows ensure that each flagged payload item or command-line is handled appropriately based on its classification, thereby enabling efficient and accurate security operations.

Feedback Loop: A continuous process where security teams provide feedback on anomaly classifications (e.g., false positives, missed anomalies) to improve the detection engine. Over time, this feedback refines thresholds, baselines, and model weights.

Security Management Client: A user interface or platform where security teams access real-time security insights, monitor flagged anomalies, and initiate remediation. This client provides tools for investigating insights, validating detections, and visualizing the overall security posture.

Security Posture Visualization: A graphical dashboard that aggregates and displays security insights, such as anomaly trends, classifications, and remediation statuses. This visualization aids security teams in assessing the health of their computing environment.

Remediation Action: An active response to a detected threat, such as isolating a compromised system, revoking user access, or blocking malicious processes. These actions, if automated, are typically initiated through the security management client; otherwise, they are manually performed.

Weighted Scoring Approach: A method of assigning scores to command-line activities based on log entropy values. The approach calculates entropy values for command-line activities (payload _items) and assigns higher scores to those with greater deviations from normal behavior, helping to prioritize and identify significant anomalies.

Global Analysis Operations: Processes that evaluate command-line data independently of specific contextual factors, using statistical methods and techniques such as BM25 for ranking and Log Entropy for quantifying the irregularity of command-line sequences to identify anomalies. These operations focus on detecting unusual patterns, rare parameters, or suspicious combinations across the entire dataset, generating an unusualness score for each command-line.

Local Analysis Operations: Processes that refine anomaly detection by incorporating historical and contextual data specific to each command-line, user, or asset. These operations calculate metrics like execution frequency, user activity, and asset usage, employing techniques such as multi-factor anomaly scoring with models like Isolation Forest to detect deviations from established behavioral baselines.

By way of illustration, operationally, the process begins with data collection and pre-processing, where command-line data is accessed and represented as payload items. Each payload item is generated by concatenating fields such as process command line, asset identifiers, user details, and parent and child process relationships. Pre-processing cleans and normalizes this data by removing extraneous information like uninteresting keywords, tokenizing it into 1-gram and 2-gram tokens to capture individual parameters and suspicious combinations, and converting these tokens into numerical representations using vectorization techniques such as CountVectorizer. BM25 is used for analyzing 2-gram tokens, while Log Entropy quantifies the rarity of 1-gram tokens. This stage structures raw command-line inputs into a format ready for further analysis.

Global analysis operates at scale, detecting anomalies by examining command-line characteristics independently of context. Payload items are scored using text analysis techniques: Log Entropy evaluates the rarity of individual parameters, while BM25 identifies unusual combinations. These techniques produce an unusualness score for each payload item, quantifying its deviation from normal patterns. Statistical properties, such as mean and standard deviation of anomaly scores, are calculated to define dynamic thresholds that classify scores into high, medium, or low-severity categories. Payload items classified as high or medium-severity anomalies are flagged, while low-severity anomalies are discarded to minimize false positives. Flagged payload items proceed to local analysis for further refinement.

Local analysis incorporates context by examining flagged payload items in relation to historical data. Metrics such as daily execution frequency, asset-specific usage, and user-specific patterns are calculated over several days. Using these metrics, the system establishes a local context to determine whether flagged command-lines align with typical usage. Multi-factor anomaly scoring is then performed using the Isolation Forest model, a machine learning algorithm that evaluates deviations across multiple contextual factors to detect outliers. This step refines the understanding of whether flagged items represent legitimate activities or potential security threats.

The outputs of global and local analyses are combined to classify flagged items into three categories. True Positives (TP) are those showing significant deviations both globally and locally, indicating malicious activity. Benign Positives (BP) are globally flagged items that align with expected local patterns, representing legitimate activities.

Legitimate Commands (LC), with low anomaly scores in both analyses, are discarded.

The application engine operationalizes these classifications to enable security responses. Insights, including classifications and anomaly scores, are generated and sent to the security management client. Within the client, a security posture dashboard visualizes the insights, categorizing flagged items for action. True Positives are routed to incident response teams for immediate investigation and remediation, such as disabling compromised accounts or quarantining affected systems. Benign Positives are reviewed by compliance teams to ensure adherence to policies. Legitimate Commands are automatically discarded.

The technical solution is designed to evolve over time, incorporating user feedback on false positives or missed threats to refine anomaly detection criteria and improve scoring models. Thresholds and baselines are updated periodically to remain effective as behavior evolves. A weighted scoring approach further enhances accuracy by integrating global and local analysis results.

For instance, when a command-line payload is accessed, it is processed to generate a usualness score through global analysis techniques. Historical data is retrieved to provide local context, and a multi-factor anomaly score is calculated. If flagged as a True Positive, the command-line triggers the generation of a security insight, which is visualized on the dashboard. A remediation action is initiated, and the outcome is recorded in a feedback loop to enhance future detection. Through this structured, adaptive approach, SCADE effectively manages command-line anomalies in complex computing environments.

## EXAMPLE SYSTEMS AND RESOURCES

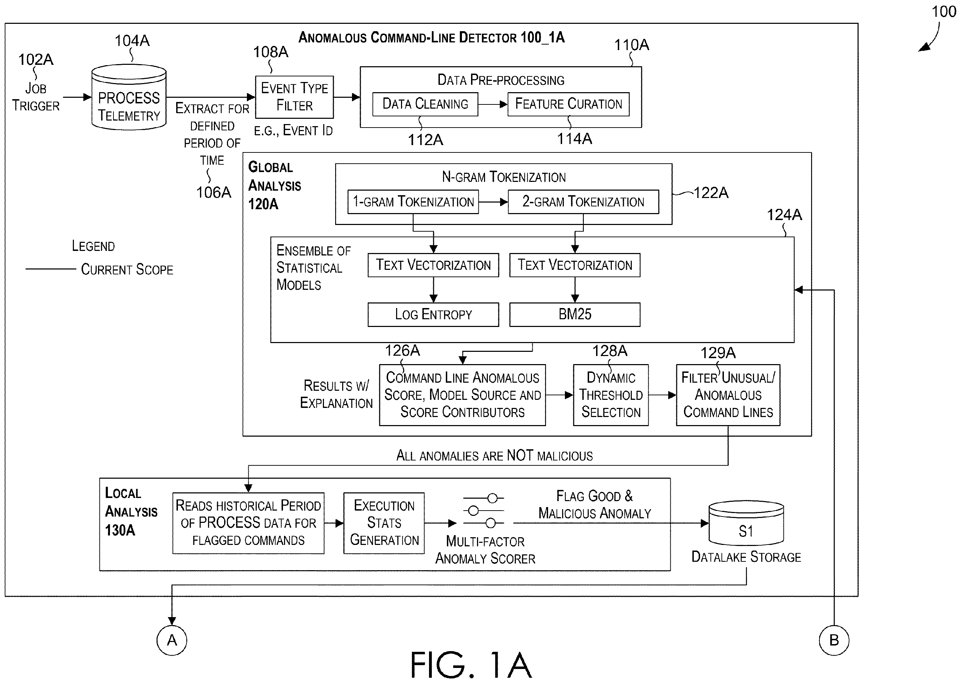

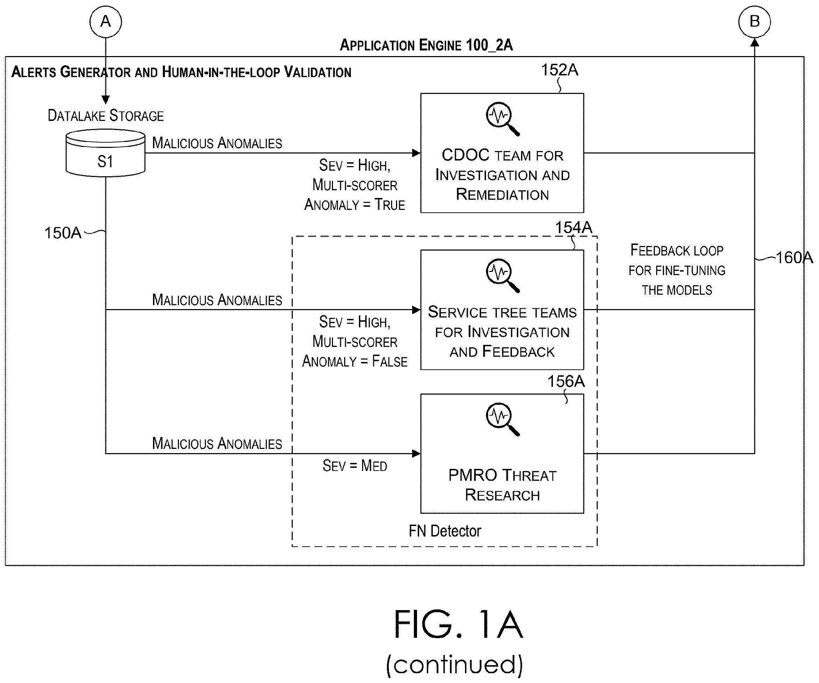

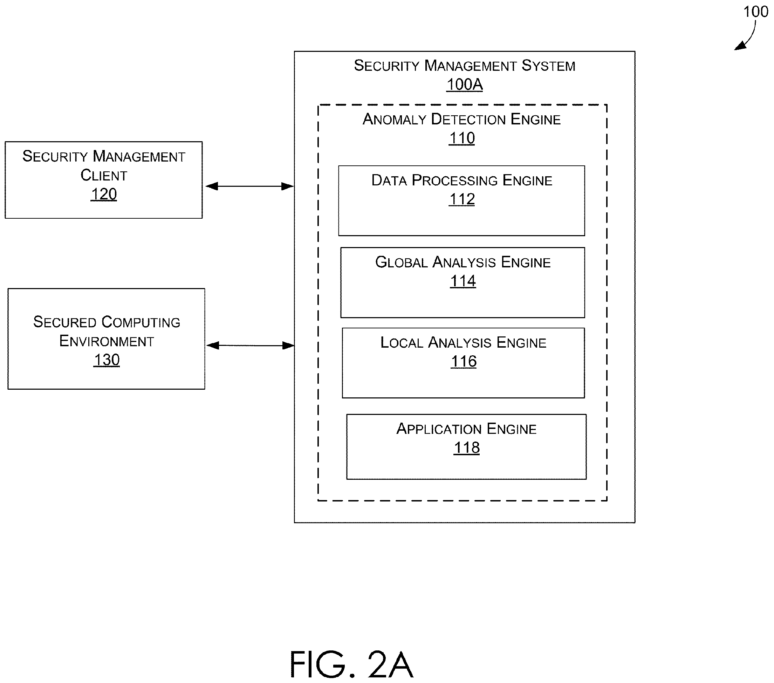

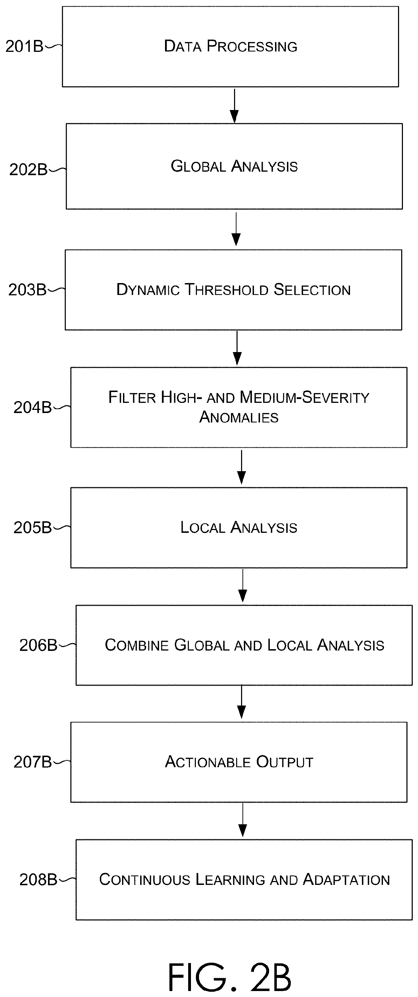

Aspects of the technical solution can be described by way of examples and with reference to FIGS. 1A - 1D, 2A and 2B. FIG. 1A illustrates a cloud computing environment (system) 100 including an anomalous command-line detector 100_1A and application engine100_2A, data pre-processing 110A, global analysis 120A, local analysis 130A, and combining the results 140A.

At a high level, SCADE can be explained with reference to the following: dual-layer detection architecture, use of statistical models in command-line analysis, granular and context n-gram tokenization, adaptable anomaly scoring and thresholding, scalability, and continuous compliance monitoring. The unique dual-layered detection framework that combines global analysis and local analysis for identifying anomalous command-line behavior. This layered approach allows SCADE to effectively detect complex "living-off-the-land" (LOL) attacks by differentiating legitimate anomalies (Benign Positive) from truly malicious (True Positive) activities, even within environments lacking labeled data. For anomaly detection on command-line data, SCADE leverages BM25 and Log Entropy as statistical models to assess command-line rarity across an enterprise-scale dataset. This global statistical approach ensures high sensitivity to both common and rare attack vectors.

Operationally, SCADE employs the dual-layered detection architecture, marking a first-time exploration of a two-layer system explicitly designed for high-volume environments. The framework's components operate as follows based on a global analysis layer associated with global analysis operations and a local analysis layer associated local analysis operations.

The global analysis layer employs global analysis operations to assess command-line data from a broader, environment-wide perspective. The global analysis layer uses BM25 and Log Entropy - to score unusualness of command-lines. By scoring commands for their rarity and unusual characteristics across all observed data, the global analysis layer effectively flags anomalies, even for commonly benign administrative tools that may be leveraged for malicious purposes.

The local analysis layer employs local analysis operations to enhance detection precision by analyzing the local context (i.e., an operational configuration - such as command-, user- and asset- specific behavior) allowing SCADE to differentiate between legitimate but rare commands and true malicious anomalies. By examining typical usage patterns, this layer adds vital context to determine whether flagged commands are within expected behavior for a given asset or user or are genuinely out of the norm.

Together, these layers form an adaptive, context-aware, and high-accuracy detection solution. SCADE's dual-layered approach enables identification of unusual command-line behavior with a high degree of reliability, meeting the demands of evolving threat landscapes without compromising operational efficiency.

Moreover, to effectively capture both isolated and combinatorial anomalies in command-line parameters, SCADE leverages a two-level n-gram approach, applying 1-gram tokenization to identify unusual parameters such as specific users, devices, or single command-line items. Meanwhile, 2-gram tokenization is employed to detect rare or suspicious combinations of parameters, which might signal malicious intent. This dual approach allows SCADE to detect both unique entities and unexpected patterns within command-line activity, strengthening detection accuracy.

SCADE introduces a dynamic threshold selection technique that adapts scoring thresholds based on recent activity patterns, allowing for a high Signal-to-Noise Ratio (SNR) and a reduction in false positives, meeting the strict demands of data center environments with SNR >98%.

SCADE is designed to operate across massive data volumes typical of data center environments, SCADE framework is scalable and built to handle billions of command-line events efficiently. This capability makes it suitable for environments where previous EDR and ML-based solutions have struggled with scalability. In addition to threat detection, SCADE supports continuous compliance by flagging non-standard practices that may violate organizational security policies. Its capability to detect legitimate anomalies helps the admins and developers to review the authorized activities running in the environment.

By way of illustration, SCADE can be employed to support identify adversarial commands such as Living-Off-The-Land (LOTL) commands in data centers. For discussion purposes, the criteria for identifying anomalous command-lines are first outlined, followed by a discussion of the key factors in metadata considerations. Finally, the design and implementation of the SCADE framework are described.

Table 1 provides an example list of unusual behavior types. This list is based on current observations and knowledge but is extendable in future.

Table 1 - Possible Types of Anomalous Behavior

| Unusual Command-line Types |
| --- |
| Small variation in target path or file name |
| Unusual combinations of parameters in command-lines |
| An asset executing a command it is not supposed to run |
| Command-lines triggered by unexpected parent processes |
| Command-lines triggering unexpected child processes |
| Communication with unusual/malicious IP addresses |
| An unusually high number of executions from a single asset on a given day |
| Malicious intent within command-lines |

There are several key factors in metadata considerations to identify anomalous behavior. In the process of detecting anomalous command-line behaviors, it is essential to analyze not just the command-lines themselves but also the associated metadata. The following key metadata features have been utilized in our framework, each chosen for its relevance to identifying potential malicious activities: command-line structure, subject user ID, domain name, parent process, child process, file and file path information, and communication with external IP.

The command-line structure, which includes the utility executed and its arguments, is an essential feature for identifying deviations from typical usage patterns. Slight changes in parameters, such as those passed to tools like certutil or curl, can significantly alter behavior, making such analyses crucial. Equally important is the subject user ID-the account under which the command is executed. This helps uncover unauthorized activity, such as low-privileged users performing administrator-level tasks or compromised accounts behaving unusually.

The domain name associated with the executing user can reveal potential lateral movements within a network or external attacks leveraging domain trust relationships when unexpected domains appear. Additionally, the parent process initiating the command and the child processes spawned by it provide insight into the broader context of execution. For example, a browser unexpectedly triggering a system utility or commands spawning scripts and utilities typical of malicious follow-up actions can raise red flags.

File and path information, including the file paths and filenames involved, is another critical element. Malicious actors often drop files in obscure or user directories to avoid detection. Finally, communication with external IP addresses, though currently a focus for future work, can reveal command-and-control activities, data exfiltration, or interaction with known malicious entities, offering another layer of defense against potential threats. Each of these features plays a vital role in maintaining system integrity and securing networks against evolving threats.

Turning to FIG. 1A, FIG. 1A illustrates components of the SCADE framework used for finding anomalous command-lines. Anomalous command-line detector 100_1A is responsible for identifying unusual or suspicious command-line activities by analyzing command-line data against established baselines and detecting deviations using global and local analysis techniques. Application engine 100_2A processes the results of anomaly detection, generates actionable security insights and alerts, facilitates remediation actions through an integrated interface, and manages human-in-the-loop validation and visualizing these insights for security teams. Anomalous command-line detector 100_1A can support data pre-processing 110A, global analysis 120A, local analysis 130A, and application engine 100_2A can support combining the results 140A, triaging anomalies 150A and providing feedback loop for fine-tuning the models 160A.

A job trigger 102A is communicated to trigger process signal telemetry 104A. Process signal telemetry refers to the collection and transmission of information related to signals sent to or received by a process during its execution. Given the large volume of this data, filters may be applied 106A, (e.g., extracting only for a predefined period of time - e.g., last 2 days of data) to focus on the most relevant and recent events for analysis. As shown, an event identifier 108A (e.g., Event ID 4688) associated with specific utility executions of interest can be filtered reduce the dataset's size. The framework analysis is divided into four parts: data pre-processing 110A, global analysis 120A, local analysis 130A, and combining the results 140A of both global analysis and local analysis.

Turning to data processing 110A, data processing 110A includes data cleaning 112A and feature curation 114A. In operation, raw process telemetry is parsed through a data cleaning process 112A where steps such as replacing multiple spaces with a single space, converting parameters to lowercase, and removing uninteresting command-line keywords are taken. Keywords deemed uninteresting, such as "-gmt" and "-seconds," are identified based on domain knowledge to ensure that their rarity does not result in false flags.

Once cleaned, the data is subjected to a feature curation 114A process in which a new field, called "payload_item," is created by concatenating specific fields. These fields include the process command-line, asset identifier ID, parent process name, child process name, subject username, target username, and token elevation type. This concatenated field is designed to capture unusual behavior more effectively.

Turning to global analysis 120A, from the curated "payload _item" field, both 1-gram and 2-gram tokens are generated during the n-gram tokenization step 122A. The 1-gram tokens isolate individual anomalies, such as unusual users, devices, or command-line parameters, each of which can independently signify abnormal behavior. The 2-gram tokens, in contrast, are used to identify unusual combinations of parameters that may not appear suspicious on their own but represent potential threats when paired together. This dual tokenization approach enables a more nuanced analysis, enhancing the accuracy of anomaly detection by addressing both single-parameter irregularities and suspicious multi-parameter patterns.

Each token is converted into a numerical format using text vectorization 124 via CountVectorizer model. This process enables textual data to be represented numerically for further analysis. BM25, a widely recognized ranking function in information retrieval, is employed. This function operates within a probabilistic retrieval framework and evaluates the relevance of a document, "D," to a query, "Q." The evaluation considers the frequency of query terms within the document and adjusts based on document length and term frequency. The model is applied to assess the significance and rarity of terms within the dataset's context.

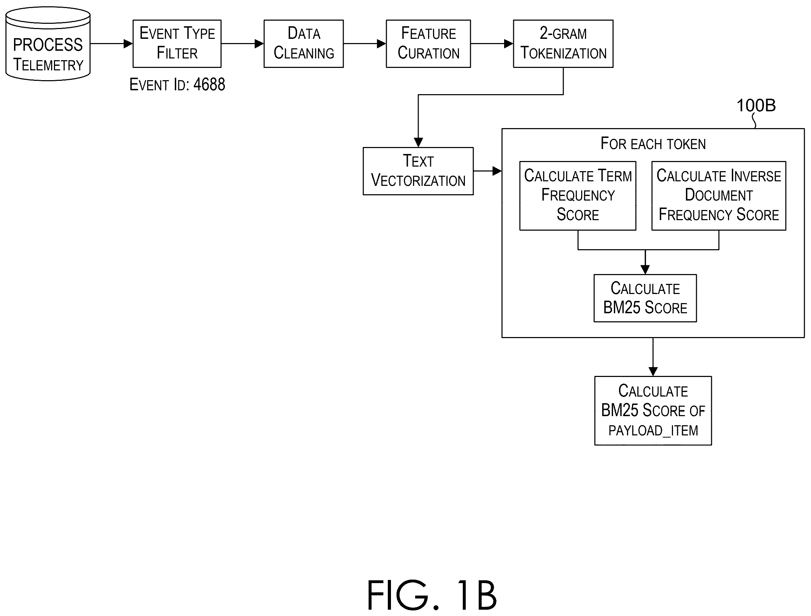

A high-level overview of the BM25 score calculation mechanism 100B is presented in FIG. 1B, illustrating its application in this analysis. The BM25 score calculation in SCADE is broken down into detailed mathematical components. The term frequency score of a token, denoted as *TF(t,d),* is calculated to represent how often a token *t* appears in the payload_item *d.* The formula used is:

$$TF\,(t,d) = \frac{f(t,d)\,.\,(k+1)}{f(t,d) + k\,.\,(1 - b + b.\frac{|d|}{avg\,(dl)})}$$

where *f(t,d)* represents the raw count of the token *t* in *d.* The parameter *k* controls the saturation of term frequency, ensuring that frequently occurring components do not dominate while preserving the contribution of rarer components. A higher *k* (e.g., 2.0) allows greater impact from high term frequencies, while a lower *k* (e.g., 0.5) diminishes the effect. The parameter *b* adjusts normalization for document length; a higher *b* (close to 1) penalizes longer payload_items more heavily, while a lower b reduces the influence of length. The length of the payload _item is represented by /*d*/, and *avg*(*dl*) denotes the average sequence length across the dataset.

The inverse document frequency (IDF) score measures the rarity of each term *t* within the entire dataset *D.* The formula for IDF is:

$$IDF(t) = \log(\frac{N - n(t) + 0.5}{n(t) + 0.5} + 1)$$

where *N* is the total number of payload items in the dataset, and *n(t)* represents the number of payload_items containing the term *t.* Rare terms (low *n(t)*) are assigned higher scores, emphasizing their importance, while common terms receive lower scores. A high IDF indicates that a term is unusual within the dataset and may represent an anomaly.

The BM25 score for each payload_item *d* is calculated by combining the TF and IDF values to measure the rarity and significance of the command sequence. The formula for the BM25 score is:

$$BM25\,(d) = \sum_{t} IDF(t).TF(t,d)$$

This approach ensures that the overall score reflects both the term's frequency within a payload _item and its rarity across the dataset, providing a comprehensive measure of anomaly likelihood.

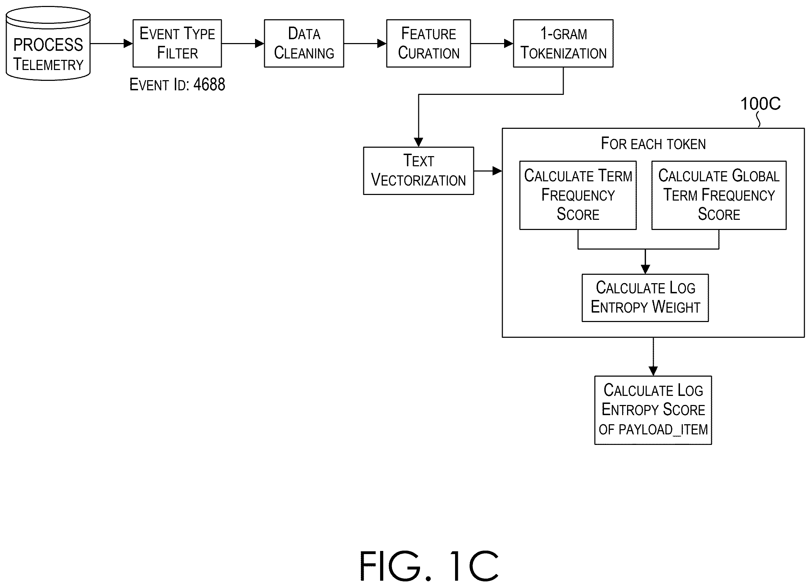

The Log Entropy model in SCADE is employed to weight the significance of terms within command-lines based on their distribution across the dataset. This method is widely used to handle sparse data and highlight informative tokens in each payload_item. FIG. 1C provides a high-level overview of the calculation flow 100C for log entropy scores.

The calculation begins with the determination of term frequency for each token *t* in a payload_item *d,* denoted as f(t,d), this represents the raw count of how often the token *t* appears within the payload_item.

Next, the global frequency score f(t) is calculated, which captures the number of payload _items in the dataset *D* where token *t* appears. This step adjusts the weighting by accounting for the ubiquity of the token throughout the dataset.

The log entropy weight for each token *t* in the payload_item *d* is then calculated using the following formula:

$$LE(t,d) = 1 + \frac{f(t,d)}{\sum_{d \in D} f(t,d)} \cdot \log \frac{|D|}{1 + f(t)}$$

where f(t,d) represents the token's frequency in the payload_item, f(t) denotes the global term frequency across the dataset, and |D| is the total number of payload _items in the dataset. This formula ensures that the weight reflects both the token's frequency in the specific payload _item and its rarity across the dataset.

Finally, the overall log entropy score of each payload _item is determined by summing up the contributions of all its tokens. Each token's score reflects both its frequency and its uniqueness across payload_items, allowing the overall score to emphasize the most significant terms. By analyzing these scores, the tokens driving the importance of the payload_item can be identified, enabling informed decisions to be made based on the observed rarity and distribution.

At 126A command-line anomalous scores, model source and sources contributors are retrieved from the processing at 124A, and communicated to 128A for dynamic threshold selection. Dynamic threshold selection is implemented to determine which anomaly scores should be flagged as true anomalies, utilizing BM25 and log entropy scores for each payload_item in the dataset. This component is designed to adaptively set thresholds for anomaly detection based on recent data patterns and statistical analysis. Fixed thresholds, which are prone to producing high rates of false positives or false negatives due to variations in system behavior, are replaced by a dynamic approach that enhances flexibility and accuracy. The process is outlined as follows:

Statistical properties of processed data, including the mean and standard deviation of anomaly scores for each run, are analyzed to establish a baseline for normal behavior. This analysis accounts for fluctuations caused by factors such as workload variations, seasonality, or specific operational activities. Thresholds for anomaly detection are calculated using a method based on standard deviations from the mean anomaly score, aligning with the Central Limit Theorem. Anomaly scores are classified into distinct categories:

- Scores more than two standard deviations from the mean are flagged as high-severity anomalies.

- Scores between 1.5 and 2 standard deviations are classified as medium-severity anomalies.

- Scores within 1.5 standard deviations are treated as low-severity anomalies or as representing normal behavior.

This tiered classification ensures that both subtle and overt anomalies are captured dynamically, reflecting recent activity patterns.

A self-adjusting mechanism recalculates the mean and standard deviation in each execution, enabling the thresholding criteria to adapt to evolving patterns. This capability is particularly important in environments like cloud or data centers, where usage patterns, tools, and workloads are continuously changing.

Dynamic threshold selection enhances the robustness and accuracy of SCADE's anomaly detection by constantly tuning detection criteria to reflect the latest activity patterns, making it well-suited to dynamic environments such as Azure data centers.

At 129A, High- and medium-severity anomalies identified in the previous step 129A are filtered for further analysis. Anomalies are currently identified based on either the log entropy or BM25 scores, with selection criteria met by either algorithm. Future plans include transitioning to a weighted approach informed by customer feedback.

Rare payload items identified during this process undergo additional filtering, as not all anomalies are malicious. For instance, test commands set up by administrators to execute infrequently may be rare but not harmful. A local analysis phase is conducted to examine the typical behavior of users, assets, and command-lines, allowing legitimate cases to be excluded from further scrutiny.

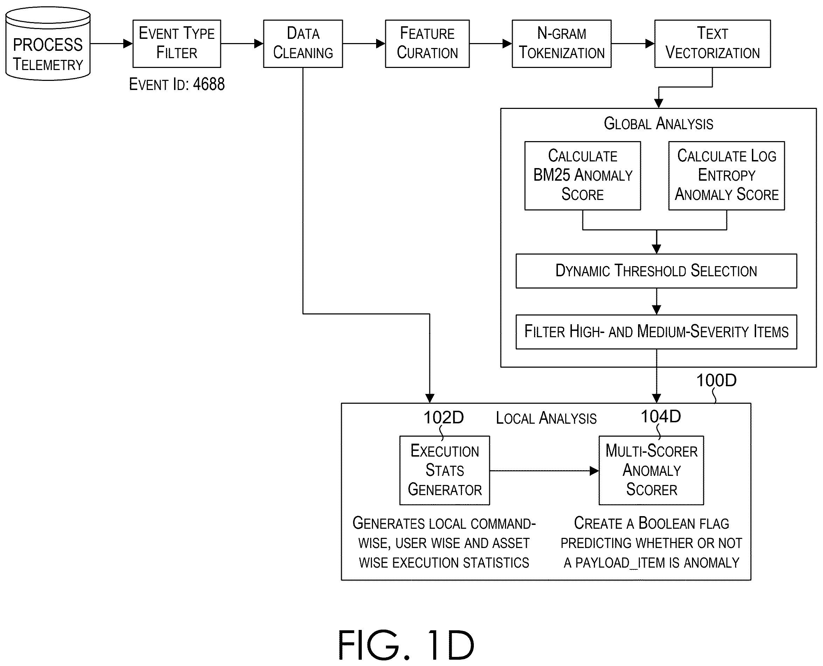

The local analysis 130A is employed to refine anomaly detection by incorporating contextual behavior patterns specific to each user, asset, or command. This method improves precision by filtering out benign anomalies that, while rare, are consistent with historical patterns. Detection accuracy is enhanced through the integration of two components: the Execution Stats Generator and the Multi-Factor Anomaly Scorer. Logical flow 100D for these components is illustrated in FIG. 1D.

Payload items flagged as high- or medium-frequency anomalies during the global analysis phase are processed by the Execution Stats Generator 102D. To include contextual information, a predefined period historical dataset (e.g., a five-day) is utilized to compute daily statistics for command-line executions associated with each flagged user and asset. Metrics such as the execution count of flagged commands on the associated asset, the total number of commands executed on the asset, the number of distinct assets executing the flagged command, and the overall command count executed by the flagged user are collected. A historical baseline is thereby established to enable the detection of deviations from normal behavior.

Multi-Factor Anomaly Scorer 104D applies the Isolation Forest anomaly detection model to the statistics generated by the Execution Stats Generator 104D. By analyzing multiple contextual factors-such as the frequency of command execution, usage of unique assets, and user-specific command patterns-the model identifies outliers that deviate from the established baseline. Scoring anomalies across multiple attributes, rather than relying on a single factor, allows for more precise detection. This combined multi-factor scoring approach reduces false positives by differentiating rare but legitimate patterns from genuinely suspicious behavior.

Turning to FIG. 1A (continued) the combining phase, insights from global and local analysis are combined in this stage to determine whether flagged payload items are genuinely malicious (True Positives, TPs) or benign (Benign Positives, BPs). This differentiation relies on multiple conditions informed by historical patterns and contextual data from both analyses.

Commands (i.e., payload items) identified with high anomaly scores in either the Log Entropy or BM25 models during global analysis, and which also deviate significantly from typical usage patterns identified in local analysis, are classified as true positives (TPs). These commands are flagged as malicious and forwarded to the customer teams such as CDOC team for investigation and remediation 152A.

Commands with high anomaly scores in either the Log Entropy or BM25 models from global analysis, but which do not exhibit significant deviations from typical usage patterns in local analysis, are classified as benign positives (BPs). These are considered legitimate and forwarded to the service tree teams for review 154A. This process ensures compliance and keeps the service tree teams informed about routine, authorized activities.

Commands exhibiting low or medium anomaly scores in both the Log Entropy and BM25 models are classified as legitimate 156A. These commands are discarded by the detection framework, as they are deemed to represent routine behavior.

Continuous learning and adaptation functionality is built within the application engine 100_2A that ensures that the anomaly detection remains effective and accurate as it evolves over time. Application engine 100_2A periodically updates its thresholds and baselines based on the most recent data patterns, adjusting to new command-line activities and shifts in system behavior.

Additionally, feedback from various teams-such as security, compliance, and incident response-plays a crucial role in refining the system. Insights from these teams regarding false positives, missed threats, and the overall effectiveness of the detection process are integrated into the system. This feedback helps to fine-tune the anomaly detection criteria and scoring models, allowing the system to adapt based on real-world experiences and continuously improve its performance.

Application engine 100_2A includes an alerts generator that automatically triggers alerts based on the classification of command-line activities. These alerts notify security teams and relevant stakeholders of potential threats, enabling timely intervention. The alerts are prioritized according to the severity of the detected anomaly, with high-severity items being flagged for immediate investigation and low-severity ones being monitored or discarded to minimize false positives.

Application engine 100_2A may also support human-in-the-loop validation. This process involves security analysts reviewing and validating the alerts generated by the system. Human expertise helps to confirm whether flagged activities represent genuine threats or benign behaviors. By incorporating human oversight, the system reduces the risk of misclassification and enhances the overall decision-making process. This human involvement allows for continuous improvement, as feedback from analysts is used to fine-tune the anomaly detection criteria and the scoring models, ensuring that the system adapts to emerging threats and evolving user behavior. Through these processes, the system is able to learn from data and feedback, evolving to stay effective in detecting and responding to anomalous command-line activities in a changing environment.

With reference 2A, FIG. 2A illustrates cloud computing system 100 security management system 100A, anomaly detection engine 110, data processing engine 112, global analysis engine 114, local analysis engine 116, and application engine 118; security management client 120, secured computing environment 130. Cloud computing system 100 encompasses a distributed infrastructure hosting various applications, user operations, and system processes. Security in this environment, including secured computing environment 130 is important, requiring proactive mechanisms to detect malicious or unusual activities. The technical operates within a secured computing environment 130 such as a data center, which provides a controlled infrastructure for hosting cloud services and safeguarding sensitive data. The security management client 120 serves as the user interface and communication gateway, allowing administrators and security personnel to interact with the system.

The security management system 100A provides anomaly detection engine 110 to support anomaly detection operations in the cloud computing system 100. Anomaly detection engine 110 design integrates multiple layers of data collection, analysis, and feedback to secure the system dynamically. Anomaly detection engine 110 processes raw data, assesses behaviors, and identifies security threats. Anomaly detection engine 110 operates through defined stages, each contributing to a refined analysis of the system's activity patterns. Data processing engine 112 focuses on collecting, preparing, and standardizing data for analysis. The raw data, primarily in the form of command-line payload items, is can be accessed from system logs, user interactions, and application activities. The process involves data collection and standardization, where the data processing engine interfaces with various data sources, such as cloud activity logs and operational monitoring tools. For example, a log entry might capture the command RUN ProcessX -USER Alice. Payload items are tokenized and cleaned, removing irrelevant characters and formatting inconsistencies to prepare them for further analysis. A command like RUN ProcessX becomes run processx for uniformity.

Global analysis engine 114 supports identifying anomalies using statistical models. Global analysis engine 114 assigns anomaly scores to payload items by analyzing their frequency and significance within the dataset. Global analysis engine 114 support vectorization for numerical analysis of payload items. Processed data is converted into a numerical format, enabling statistical and machine learning operations. Each token or word in a command is assigned a numerical representation based on its occurrence and significance in the dataset. By way of illustration, BM25 anomaly scoring uses BM25, a ranking function widely used in text retrieval, to calculate scores based on Term Frequency (TF) and Inverse Document Frequency (IDF) for each 2-gram token. For instance, if a command like "backup_script" appears rarely but matches a pattern associated with unusual activity, it receives a high BM25 score. Log entropy anomaly scoring emphasizes the rarity and uniqueness of command-line tokens by computing Log Entropy weights. A token's significance increases as it becomes less frequent but more concentrated in specific contexts. The command "reset_kernel_params," used infrequently by administrators, would score high due to its limited and context-specific occurrences.

Global analysis engine 114 supports dynamic threshold selection where anomaly scores are analyzed using statistical properties such as mean and standard deviation. This enables dynamic classification into high-, medium-, or low-severity anomalies. For example, scores exceeding two standard deviations above the mean are flagged as high-severity, warranting further inspection. Payload items classified as high or medium severity are passed to the next stage, while low-severity items are discarded to minimize false positives.

Local analysis engine 116 supports a local analysis phase that contextualizes flagged anomalies, focusing on specific behaviors associated with users, assets, and commands. Local analysis engine 116 executes stats generation based on retrieving and analyzing a predefined period (e.g., five days) of historical data for each flagged command. Key metrics include: Execution frequency: How often the command is executed; Asset-specific usage: Whether the command is limited to specific machines or environments; User behavior: Patterns of execution by the user. For example, a command "update _registry" executed five times daily by User A would establish a baseline. If it appears on a previously unused asset, this deviation is flagged for further scrutiny.

Local analysis engine 116 also support multi-factor anomaly scoring using an isolation forest model, the where the local analysis engine 116 evaluates anomalies based on multiple attributes, such as usage frequency and execution patterns. This multi-faceted scoring minimizes false positives by distinguishing between rare legitimate activities and suspicious behaviors. For example, a command executed on a new asset during non-typical hours might score higher than the same command executed within usual parameters.

The global analysis engine 114 processes global analysis data, which consists of command-line characteristics and parameters without contextual factors, to generate global analysis results (anomaly scores and severity classifications). The local analysis engine 116 uses local analysis data, which includes historical and contextual metrics (e.g., user behavior, asset usage), to refine these results and generate local analysis results (contextualized anomaly classifications). Together, the global and local analysis engines combine their respective results to provide a comprehensive assessment of command-line anomalies.

By way of illustration, global analysis data refers to information used to evaluate patterns, anomalies, or trends across an entire dataset, independent of specific contexts. Global analysis data is analyzed holistically, often focusing on characteristics that are consistent or comparable across multiple entities. For example, in anomaly detection, global analysis data includes aggregated statistics such as overall frequency distributions, the uniqueness of command-line parameters across all systems, and the general prevalence of certain patterns within the dataset. The goal is to identify deviations from what is considered globally "normal" or usual without regard to individual or localized circumstances.

Local analysis data pertains to information relevant to a specific context, such as an individual system, user, or environment. Local analysis data is used to establish a localized baseline of expected behavior, factoring in historical patterns and situational nuances. For instance, in the context of command-line anomaly detection, local analysis data might include metrics like the frequency of command-line executions across all nodes, frequency of command-line executions by a specific user, and asset-specific command usage trends. By leveraging this context, local analysis focuses on determining what is typical or anomalous for the specific context rather than the global dataset.

Global analysis results (or output) refer to the findings derived from analyzing command-line data across the entire dataset, independent of any specific context. These results typically involve identifying anomalies based on overall statistical patterns and broad data trends. The output of global analysis includes:

Anomaly Scores: A numeric score representing how unusual a command-line item is compared to the global dataset. These scores are typically derived using techniques such as BM25 or Log Entropy.

Severity Classification: Based on the anomaly scores, items are classified into severity levels (e.g., high, medium, or low). Items with high anomaly scores are flagged for further review.

Pattern Recognition: Identification of unusual or rare parameters or rare parameter combinations across all command-line activities, which may indicate potential security threats.

The goal of global analysis results is to identify potentially anomalous or suspicious command-line activity across the entire system, irrespective of individual user or asset behaviors.

Local analysis results (or output) refer to the findings derived from examining command-line data in the specific context of individual commands, users, or assets. These results refine and contextualize the anomalies identified in the global analysis. The output of local analysis includes:

Contextual Anomaly Scores: Refined anomaly scores that factor in local context, such as the historical behavior of a user or asset, frequency of specific command executions, and typical usage patterns.

Behavioral Classification: Classifications such as True Positives (TP) (genuine security threats), Benign Positives (BP) (legitimate but unusual activity), or Legitimate Commands (LC) (normal activity), based on how the flagged anomalies fit into local usage patterns.

Outlier Detection: Identification of command-line activities that deviate significantly from the established baseline of local behavior, using techniques like the Isolation Forest model to detect significant outliers.

The goal of local analysis results is to provide a more accurate and context-aware classification of command-line activities, helping to distinguish between truly malicious actions and benign anomalies.

Application engine 118 synthesizes the outputs of global and local analyses to produce actionable insights. Application engine 118 cross-validates global anomaly scores with local contextual deviations. Commands can be are classified as: True Positives (TPs): Commands with high global scores and local deviations, such as "delete_backup_files" initiated by an unauthorized user. Benign Positives (BPs): Commands with high global scores but no local deviations, such as routine maintenance operations. Legitimate Commands (LCs): Commands with low or medium scores discarded as non-malicious.

Security management client 120 provides comprehensive dashboards and tools for visualizing anomaly trends, viewing flagged payload items, and monitoring system performance. Security management client 120 also facilitates the configuration of detection parameters and the review of actionable outputs generated by the anomaly detection processes. Security alerts and remediation suggestions are communicated through this interface, enabling swift responses to identified threats.

Application engine 118 can generation action outputs. TPs can be forwarded to the Cloud Security Operations Center (CDOC) for immediate action. BPs can be sent to service tree teams for compliance reviews, ensuring transparency for legitimate but unusual activities. Legitimate commands can be discarded, reducing unnecessary processing overhead. Application engine 118 also supports continuous learning and adaptation where thresholds, baselines, and scoring criteria are periodically updated using recent data and team feedback. For example, commands previously flagged as BPs but consistently validated as legitimate are used to refine the system's scoring models.

With reference to FIG. 2B, FIG. 2B illustrates high-level steps of the SCADE framework that supports to identifying and classifying unusual command-line activities in computing environments. By integrating advanced statistical models, contextual analysis, and adaptive thresholds, SCADE ensures accurate differentiation between malicious commands, legitimate anomalies, and routine activities. Its multi-step process leverages global anomaly scoring, local behavior analysis, and a feedback-driven learning mechanism to provide precise, actionable insights, enhancing the security and compliance of complex systems. This streamlined workflow is tailored for environments where behavior patterns evolve rapidly, such as cloud infrastructures and data centers. The SCADE workflow is illustrate below based on the following example steps.

At step 201B - Data Processing - The process begins with the collection of raw command-line payload items from the system. These items are then tokenized and cleaned, converting them into a suitable format for analysis. Initial text vectorization is performed using CountVectorizer, which numerically represents each token for downstream analysis.

At step 202B - Global Analysis - In the global analysis phase, anomaly scoring is conducted using two methods: BM25 and Log Entropy. Anomaly Scoring using BM25 includes computing Term Frequency (TF) and Inverse Document Frequency (IDF) scores for each token. The BM25 score for each payload item is calculated, identifying rare and significant commands. Anomaly Scoring using Log Entropy includes calculating Term Frequency and Global Frequency for tokens. The Log Entropy weight for each token is computed to highlight its rarity and significance. Log Entropy scores are assigned to payload items.

At step 203B - Dynamic Threshold Selection - The statistical properties of anomaly scores, including mean and standard deviation, are analyzed within each run. Thresholds are dynamically computed to classify anomaly scores into high-, medium-, or low-severity categories based on deviations from the mean. Payload items with high- and medium-severity anomaly scores are flagged for further analysis.

At step 204B - Filtering of High- and Medium-Severity Anomalies - Payload items that meet high- or medium-severity criteria based on either BM25 or Log Entropy scores are identified. Low-severity anomalies are discarded to reduce false positives. Flagged payload items are forwarded to the local analysis phase.

At step 205B - Local Analysis - In the local analysis phase, execution stats are generated for each flagged payload item by retrieving a predefined period (e.g., five days) of historical data. Metrics such as command execution frequency, unique asset usage, and user-specific behavior are calculated to establish a contextual baseline for detecting deviations from normal behavior. An Isolation Forest model is used to score anomalies based on multiple contextual attributes. Factors such as execution patterns and asset usage are combined to improve detection accuracy.

At step 206B - Combining Global and Local Analysis - Flagged payload items are cross-validated using insights from both global and local analyses. Items are classified into three categories. True Positives (TPs): Commands with high anomaly scores in global analysis and significant deviations in local analysis. Benign Positives (BPs): Commands with high anomaly scores but no deviations in local analysis. Legitimate Commands: Commands with low or medium anomaly scores, discarded as routine behavior.

At step 207B - Actionable Outputs - True positives (malicious activities) are forwarded to the CDOC team for investigation and remediation. Benign positives (legitimate but unusual activities) are sent to service tree teams for review and compliance checks. Legitimate commands are discarded to maintain system efficiency.

At step 208B - Continuous Learning and Adaptation - Thresholds and baselines are periodically updated using recent data patterns. Feedback from teams is incorporated to refine anomaly detection criteria and scoring models. A transition to a weighted scoring approach that integrates feedback is implemented for improved accuracy. This detailed implementation ensures that the SCADE framework effectively detects and mitigates anomalous command-line activities, enhancing the security of large-scale environments like Azure data centers.

By way of illustration, to implement the SCADE anomaly detection framework, the process begins with data pre-processing. Initially, raw process telemetry data is parsed to prepare it for further analysis. Next, feature curation is performed by creating a composite field called payload _item. This field is formed by concatenating relevant information such as the process command line, asset identifier, parent process name, child process name, subject username, target username, and token elevation type.

Following this, n-gram tokenization is applied to generate 1-gram and 2-gram tokens. These tokens are saved in a separate column for further processing. In the anomaly scoring phase, text vectorization is conducted by converting the tokens into numerical representations using CountVectorizer. For BM25 scoring, a custom function is used to compute Term Frequency (TF), Inverse Document Frequency (IDF), and BM25 scores for each payload item. Similarly, Log Entropy scoring is performed by computing Log Entropy weights using a mathematical formula.

Dynamic threshold selection is then applied to classify anomaly scores into high, medium, and low-severity categories. This is done by analyzing the mean and standard deviation of the scores and dynamically computing thresholds based on these statistical properties. During the local analysis phase, execution statistics are generated for flagged payload items by retrieving a predefined period (e.g., five days) of historical data. Metrics such as command execution frequency, unique asset usage, and user-specific behavior are calculated to establish a contextual baseline. An Isolation Forest model can be used to score anomalies based on multiple contextual attributes, combining factors like execution patterns and asset usage to improve detection accuracy.

The results from both global and local analyses are merged to classify payload items as True Positives, Benign Positives, or Legitimate Commands. True Positives are commands with high anomaly scores in global analysis and significant deviations in local analysis. Benign Positives are commands with high anomaly scores but no deviations in local analysis, while Legitimate Commands are those with low or medium anomaly scores, discarded as routine behavior.

Finally, the results are stored and shared with the appropriate teams for further action. True positives are forwarded to the CDOC team for investigation and remediation, benign positives are sent to service tree teams for review and compliance checks, and legitimate commands are discarded to maintain system efficiency. This comprehensive process ensures that SCADE operates efficiently to detect and classify anomalies across large-scale environments.

Finally, the results are stored and shared with the appropriate teams for further action. True positives are forwarded to the CDOC team for investigation and remediation, benign positives are sent to service tree teams for review and compliance checks, and legitimate commands are discarded to maintain system efficiency. This comprehensive process ensures that SCADE operates efficiently to detect and classify anomalies across large-scale environments.

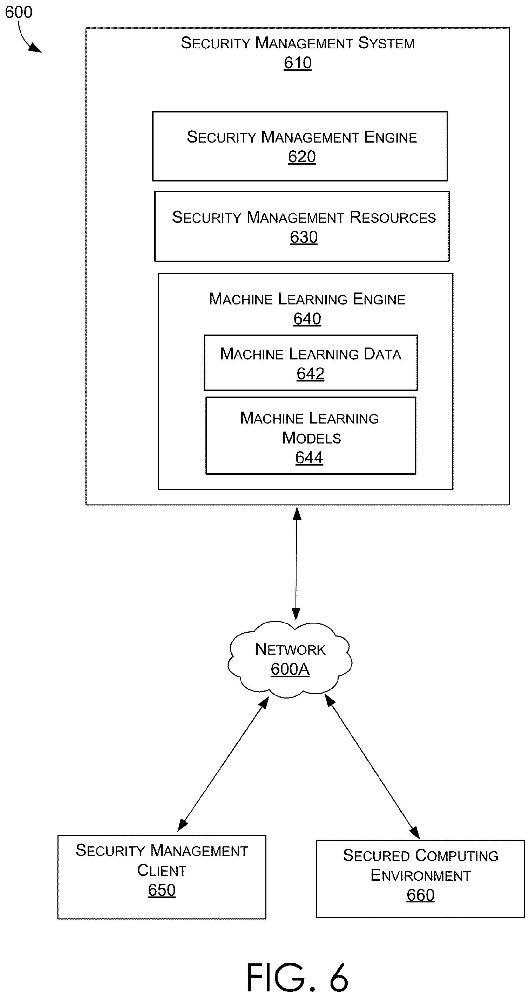

Aspects of the technical solution have been described by way of examples and with reference to FIGS. 1A - 1D, 2A and 2B. FIG. 2A is a block diagram of an exemplary technical solution environment, based on example environments described with reference to FIGS. 6, 7 and 8 for use in implementing embodiments of the technical solution are shown. Generally the technical solution environment includes a technical solution system suitable for providing the example cloud computing system 100 in which methods of the present disclosure may be employed. In particular, FIG 1 illustrates a high level architecture of the cloud computing system 100 in accordance with implementations of the present disclosure, among other engines, managers, generators, selectors, or components not shown (collectively referred to herein as "components").

## EXAMPLE METHODS

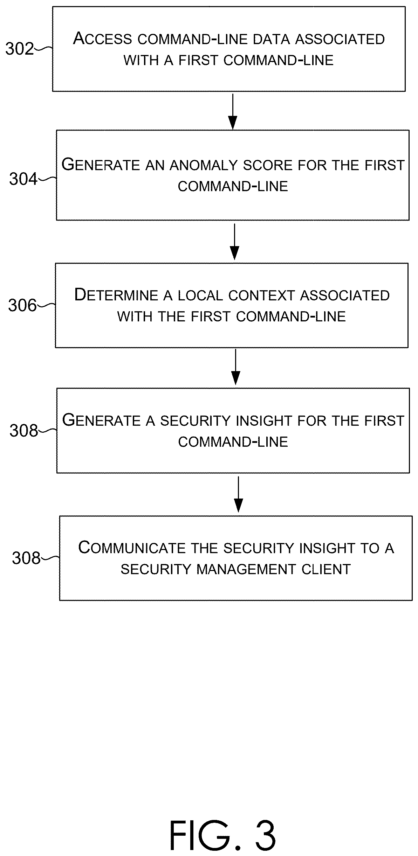

With reference to FIGS. 3, 4, and 5, flow diagrams are provided illustrating methods for providing anomaly detection using an anomaly detection engine of a security management system. The methods may be performed using the security management system described herein. In embodiments, one or more computer-storage media having computer-executable or computer-useable instructions embodied thereon that, when executed, by one or more processors can cause the one or more processors to perform the methods (e.g., computer-implemented method) in the security management system (e.g., a computerized system).

Turning to FIG. 3, a flow diagram is provided that illustrates a method 300 for providing anomaly detection using an anomaly detection engine of a security management system. At block 302, access command-line data associated with a first command-line. At block 304, generate an anomaly score for the first command-line. At block 306, determine a local context associated with the first command-line. At block 308, generate a security insight for the first command-line. At block 310, communicate the security insight to a security management client.

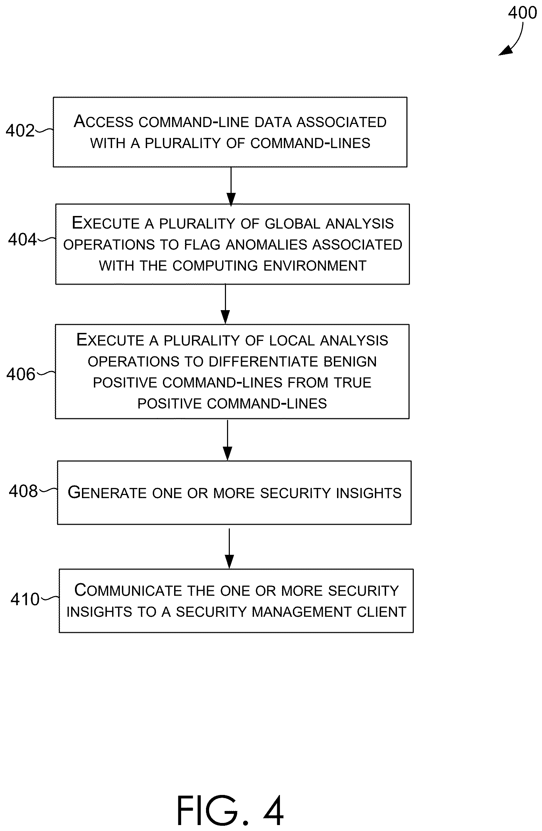

Turning to FIG. 4, a flow diagram is provided that illustrates a method 400 for providing anomaly detection using an anomaly detection engine of a security management system. At block 402, access command-line data associated with a plurality of command-lines. At block 404, execute a plurality of global analysis operations to flag anomalies associated with the computing environment. At block 406, execute a plurality of local analysis operations to differentiate benign positive command-lines from true positive command-lines. At block 408, generate one or more security insights. At block 310, communicate the one or more security insights to a security management client

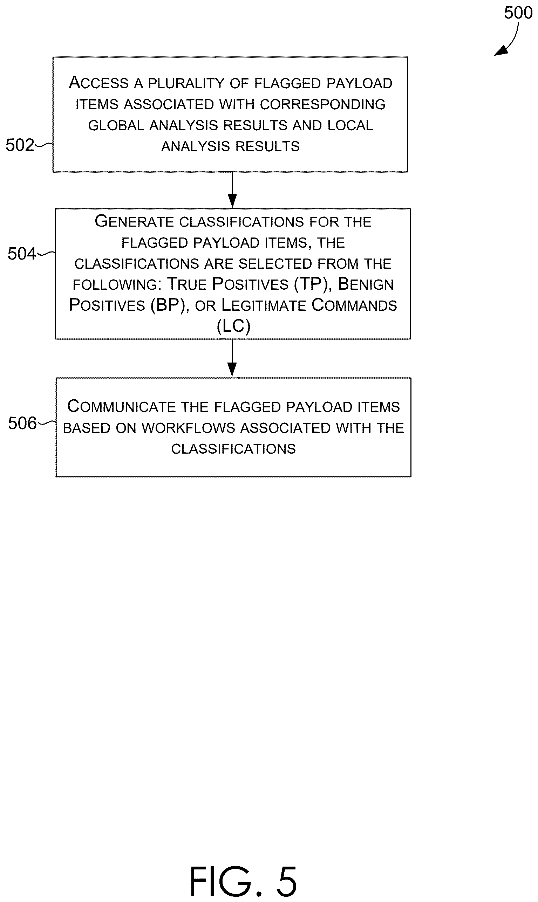

Turning to FIG. 5, a flow diagram is provided that illustrates a method 500 for providing anomaly detection using an anomaly detection engine of a security management system. At block 502, access a plurality of flagged payload items associated with corresponding global analysis results and local analysis results. At block 504, generate classifications for the flagged payload items, the classifications are selected from the following: True Positives (TP), Benign Positives (BP), or Legitimate Commands (LC). At block 506, communicate the flagged payload items based on workflows associated with the classifications.

## TECHNICAL IMPROVEMENT

Embodiments of the present techniques have been described with reference to several inventive features (e.g., operations, systems, engines, and components) associated with a security management system. Inventive features described include: operations, interfaces, data structures, and arrangements of computing resources associated with providing the functionality described herein relative with reference to an anomaly detection engine. Functionality of the embodiments of the present invention have further been described, by way of an implementation and anecdotal examples - to demonstrate that the operations for providing the anomaly detection engine as a solution to a specific problem in security management technology to improve computing operations in security management systems.

By way of example, the anomaly detection engine enables proactively identifying and mitigating potential security threats by continuously monitoring and analyzing command-line activities, ensuring the security and integrity of the data center environment. The anomaly detection engine operates to detect command-line entries that significantly differ from the baseline of typical activities, which could indicate potential security threats or malicious actions. Statistical models, such as BM25 and Log Entropy, are employed to assess the rarity and significance of command-line tokens, helping to identify unusual patterns that may not be immediately apparent. Command-line activities are analyzed in both global and local contexts, considering overall behavioral patterns across the data center as well as specific user and asset behaviors to detect anomalies. Detection thresholds are dynamically adjusted based on real-time data to classify anomalies into different severity levels, reducing false positives and negatives by calibrating sensitivity according to recent activity patterns. Various factors, including execution frequency, asset usage, and user behavior, are combined to score anomalies, enhancing the accuracy of detecting true anomalies.

**ADDITIONAL SUPPORT FOR DETAILED DESCRIPTION EXAMPLE SECURITY MANAGEMENT SYSTEM IN A COMPUTING ENVIRONMENT**

Referring now to FIG. 6, FIG. 6 illustrates a computing environment in which implementations of the present disclosure may be employed. In particular, FIG. 6 shows a high level architecture of an example cloud computing platform 600 and security management system 610 that can host a technical solution environment. It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

The cloud computing environment 100 provides computing system resources for different types of managed computing environments. For example, the cloud computing platform supports delivery of computing services - including compute, servers, storage, databases, networking, and intelligence. The components of cloud computing environment 600 may communicate with each other over a network 600A which may include, without limitation, one or more local area networks (LANs) and/or wide area networks (WANs).

The security management system 610 provides security management functionality for computing environments. The security management system 610 supports planning, implementing, controlling, and monitoring security measures to protect assets, resources, and information from various threats and risks in computing environment. Security management system 610 is configured to trigger alerts for potential or actual threats - including suspicious behavior or malicious behavior - in a computing environment. For example, an alert configuration can be defined to include alert settings, which if met, trigger an alert. The security alert can refer to a human-readable, technical notification regarding current vulnerabilities, exploits, and other security issues associated with a computing environment. The alert can be communicated to a client device that is managed by a security administrator who can then follow up on the alert.

Different types of potential threats and actual threats exist, for example, use of proxies to gain access to a computing environment or unauthorized running of crypto mining software in a computing environment. An attack on a cloud computing environment - for example, performed by a malicious actor - can include several attack operations that are executed to gain access to resources on the cloud computing environment. The attack operations can trigger alerts, when the security system is configured to monitor for these types of attack operations. If multiple attack operations are identified - and a determination that the attack operations are related is made - the alerts associated with the attack operations can be defined as a security incident. The security incident can refer to a collection of correlated alerts and corresponding security data that make up a story of an attack. The attack story can be associated with a security graph and an attack path definition that identifies attack objects (e.g., attack operations, compromised resources, file locations and file types). The attack path can describe how an attacker gained access to a computing environment and related operations and computing resources associated with the attack and unauthorized access. A security incident can advantageously combine multiple alerts associated with a single attack to support managing and responding to the security incident.

The security management system 610 includes a security management engine 620 that is a computing environment that supports executing computational tasks associated with the security management system 610. The security management engine 620 can be a hardware or software component that performs computational operations, such as, mathematical calculations, data processing, and algorithm execution. The security management system 610 integrates security management resources 630 into security management system 610 to effectively provide security management in a computing environment.

The security management engine 610 can be a security posture management engine that is responsible for communicating with security management engine client 660. The security management engine client 660 supports client-side security management operations for providing security management in the security management system 610. The security management engine client 660 supports presenting a security posture visualization associated with security management engine output and communicating an indication to perform a remediation action associated with security management engine output. The security management engine 620 operates to provide visibility to security status of resources in a computing environment. Security posture information can be associated with security management engine output. Security posture information can include security management engine output as described herein with regard to the technical solution.

The security management engine 620 includes a security graph API that provides access to a security graph security graph data. The security graph provides telemetry data associated with a plurality of resources in a computing environment. In particular, the telemetry data can be security data that is associated with security providers in a computing environment. The security graph and security graph API can support integrating security alerts from different security providers via an API connector that streams alerts to the security management engine 620.

The security management engine 620 may assess threats and develop risk scores - using risk assessment operations. A risk associated with security management engine output can used to generate security posture information. In particular, a risk score can refer to a numerical value that represents the level of risk associated with a particular security incident associated with the annotation. It takes into account various factors such as the likelihood of the event occurring and the potential impact of the event if it does occur. The risk score is used to prioritize actions and allocate resources accordingly.

The security management engine 620 can further support generating security posture visualizations based on security management engine output. The security posture information can be generated security management engine output such that security posture information is prioritized and filtered. A prioritization identifier (e.g., high, medium, low) can be provided in the security posture visualization in combination with an alert associated with a security incident. Alternatively, a notification associated with the security management information, security prioritization information or the alert can be communicated. Other variations and combinations of communications associated with security management engine output are contemplated with embodiments described herein.

The security management client 650 can support accessing a security posture visualization and causing display of the security posture visualization. The security management client 650 can include the security posture management engine client that supports receiving security posture information associated security management engine output from the security management system 610 and causing presentation of the security posture information. The security posture information can specifically include security posture visualizations associated with the security management engine output. The secure posture visualization can further include remediation actions associated different alerts - including alerts that are associated with the security management engine output. The security management system can be a security management system described in U.S. Patent Application Serial No. 18/451,405, filed August 17, 2023, entitled "ARTRIFICIAL INTELLIGENCE ENGINE IN A SECURITY MANAGEMENT SYSTEM," which is incorporated herein by reference in its entirety.

The security management client 130 can further support executing a remediation action. In particular, the security posture visualization can include a remediation action for an alert associated with security management engine output. The security management client 130 can receive an indication to perform the remediation action associated with security management engine output. Based on receiving the indication to execute the remediation action, the security management client 130 can communicate the indication to execute the remediation action to cause execution of the remediation action.

The security management resources 630 refer to computing elements (e.g., components, capability, or entities) that collectively enable the security management engine 620 operations. The security management resources 630 encompass a spectrum of computing elements, beginning with the diverse operations the security management resources 630 can perform, ranging from complex computations to data manipulations. Interfaces, an integral part of the security management resources 630, provide the means for both user interaction and seamless integration with external systems, ensuring a dynamic and interactive computing experience. The data facet of the security management resources 630 involves various types: input data, which is the information provided for processing; processing data, representing the data manipulated during computational tasks; and output data, the results generated by the security management engine 620. In this way, the security management resources 630 support the broader security management engine 620 and security management system 610.

Security management resources 630 contextual attack disruption resources that support leveraging contextual information and impact analysis to thwart or mitigate ongoing attacks on a computing environment. Contextual attack disruption resources encompass the core operations, interfaces, and data components within security management system 610, collectively supporting its functionality in overseeing diverse computing environments across the cloud computing system 600. Operations of the contextual attack disruption resources include understanding the normal behavior and processes within the computing environment. This includes monitoring system operations, network traffic, user activities, and application behavior to establish a baseline of normalcy. When an attack occurs, security analysts can analyze the deviation from normal operations to identify anomalies or suspicious activities. By understanding the context in which these deviations occur, such as the timing, sequence, and frequency of events, analysts can assess the severity and potential impact of the attack. Interfaces, including graphical user interfaces, command-line interfaces, web-based portals, APIs, and integration points, facilitate interaction with administrators, end-users, devices, and other cloud computing systems. Data components encompass the storage, processing, and transmission of data within the computing environment. This includes databases, file systems, memory, and data pipelines. Contextual attack disruption in the context of data components involves monitoring data flows, access patterns, and data integrity to detect and mitigate attacks targeting sensitive information.

Machine learning engine 640 is a machine learning framework or library that operates as a tool for providing infrastructure, algorithms, capabilities for designing, training, and deploying machine learning models. The machine learning engine 640 can include pre-built functions and APIs that enable building and applying machine learning techniques. The machine learning engine 140 can provide a machine learning workflow from data processing and feature extraction to model training, evaluation, and deployment.

Machine learning data 642 refers to the structured or unstructured information used to train, validate, and test machine learning models. This machine learning data 642 typically comprises input features (also known as independent variables or predictors) and their corresponding target values (also known as dependent variables or labels). Machine learning data 642 can come from various sources, such as databases, sensor readings, text documents, images, audio recordings, or streaming data sources. Machine learning data 642 may require preprocessing, cleaning, and transformation to ensure its suitability for training machine learning models. Additionally, machine learning data 642 is often divided into training, validation, and testing sets to assess the performance and generalization ability of trained models accurately.

Machine learning models 644 are algorithms or mathematical representations that learn patterns and relationships from the provided data to make predictions or decisions without being explicitly programmed. Machine learning models 644 models are trained using the machine learning data 642, where they iteratively adjust their internal parameters or coefficients to minimize prediction errors or maximize performance metrics. Machine learning models 644 can be classified into various types based on their learning algorithms and the nature of the problem they address, including supervised learning models (e.g., regression, classification), unsupervised learning models (e.g., clustering, dimensionality reduction), and reinforcement learning models. Once trained, machine learning models 644 can be deployed in production environments to make predictions on new, unseen data instances. Regular evaluation and monitoring of model performance are essential to ensure their accuracy, reliability, and effectiveness in real-world applications.

The security management client 650 supports access to security management system 660. Security management client 650 provides a graphical or command-line interface for users or administrators to interact with security management system 610, handling tasks such as planning, implementing, controlling, and monitoring security measures to protect assets, resources, and information from various threats and risks in computing environments. The security management client 650 supports centralized security management, security enforcement, and compliance within a computing environment (e.g., organization's infrastructure), empowering efficient security administration and safeguarding resources.

Secured computing environment 660 can refer to a computing environment that is secured using the security management system 610. For example, cloud computing environments provided by cloud providers encompass various types, including public, private, hybrid, and multi-cloud environments, as well as containerized environments. In a public cloud setup, resources are shared among multiple customers and accessed over the internet, with security managed by the provider through measures like network segmentation and encryption. Private clouds, dedicated to a single organization, offer greater control and are secured through strict access controls and encryption, either by the organization itself or a third-party provider. Hybrid clouds combine elements of public and private clouds, requiring integrated security measures across both environments, such as identity federation and consistent monitoring. Multi-cloud environments leverage services from multiple providers, necessitating standardized security policies and controls for consistent protection. Containerized environments, utilizing technologies like Docker and Kubernetes, secure applications through container image scanning, runtime monitoring, and access control. Across all types, the security management system 610 can provide security management, including compliance certifications, threat intelligence, and security consulting, to safeguard data, infrastructure, and applications from evolving cyber threats and ensure adherence to regulatory requirements.

## EXAMPLE DISTRIBUTED COMPUTING SYSTEM ENVIRONMENT

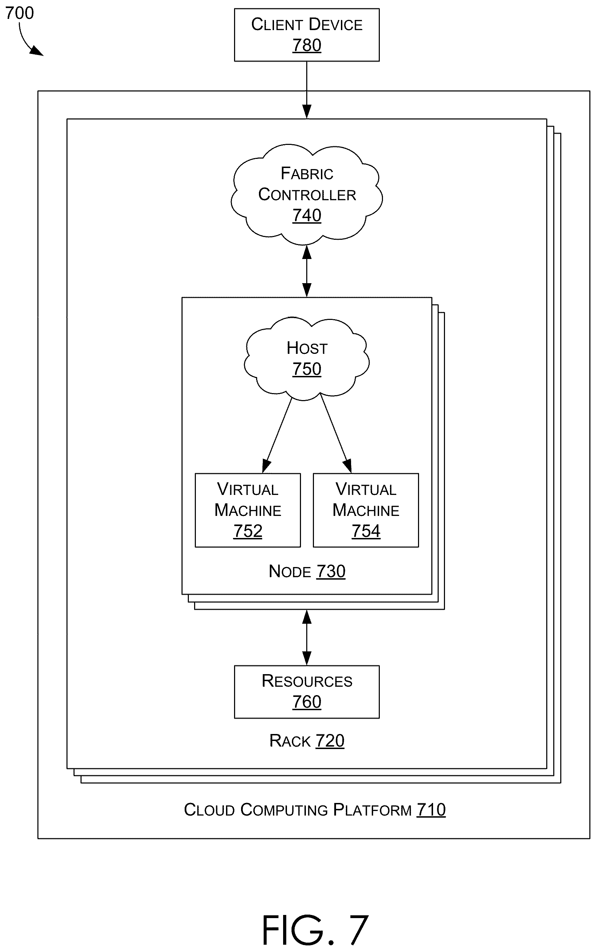

Referring now to FIG. 7, FIG. 7 illustrates an example distributed computing environment 700 in which implementations of the present disclosure may be employed. In particular, FIG. 7 shows a high level architecture of an example cloud computing platform 710 that can host a technical solution environment, or a portion thereof (e.g., a data trustee environment). It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

Data centers can support distributed computing environment 700 that includes cloud computing platform 710, rack 720, and node 730 (e.g., computing devices, processing units, or blades) in rack 720. The technical solution environment can be implemented with cloud computing platform 710 that runs cloud services across different data centers and geographic regions. Cloud computing platform 710 can implement fabric controller 740 component for provisioning and managing resource allocation, deployment, upgrade, and management of cloud services. Typically, cloud computing platform 710 acts to store data or run service applications in a distributed manner. Cloud computing infrastructure 710 in a data center can be configured to host and support operation of endpoints of a particular service application. Cloud computing infrastructure 710 may be a public cloud, a private cloud, or a dedicated cloud.

Node 730 can be provisioned with host 750 (e.g., operating system or runtime environment) running a defined software stack on node 730. Node 730 can also be configured to perform specialized functionality (e.g., compute nodes or storage nodes) within cloud computing platform 710. Node 730 is allocated to run one or more portions of a service application of a tenant. A tenant can refer to a customer utilizing resources of cloud computing platform 710. Service application components of cloud computing platform 710 that support a particular tenant can be referred to as a multi-tenant infrastructure or tenancy. The terms service application, application, or service are used interchangeably herein and broadly refer to any software, or portions of software, that run on top of, or access storage and compute device locations within, a datacenter.

When more than one separate service application is being supported by nodes 730, nodes 730 may be partitioned into virtual machines (e.g., virtual machine 752 and virtual machine 754). Physical machines can also concurrently run separate service applications. The virtual machines or physical machines can be configured as individualized computing environments that are supported by resources 760 (e.g., hardware resources and software resources) in cloud computing platform 710. It is contemplated that resources can be configured for specific service applications. Further, each service application may be divided into functional portions such that each functional portion is able to run on a separate virtual machine. In cloud computing platform 710, multiple servers may be used to run service applications and perform data storage operations in a cluster. In particular, the servers may perform data operations independently but exposed as a single device referred to as a cluster. Each server in the cluster can be implemented as a node.

Client device 780 may be linked to a service application in cloud computing platform 710. Client device 780 may be any type of computing device, which may correspond to computing device 700 described with reference to FIG. 7, for example, client device 780 can be configured to issue commands to cloud computing platform 710. In embodiments, client device 780 may communicate with service applications through a virtual Internet Protocol (IP) and load balancer or other means that direct communication requests to designated endpoints in cloud computing platform 710. The components of cloud computing platform 710 may communicate with each other over a network (not shown), which may include, without limitation, one or more local area networks (LANs) and/or wide area networks (WANs).

**EXAMPLE COMPUTING ENVIRONMENT**

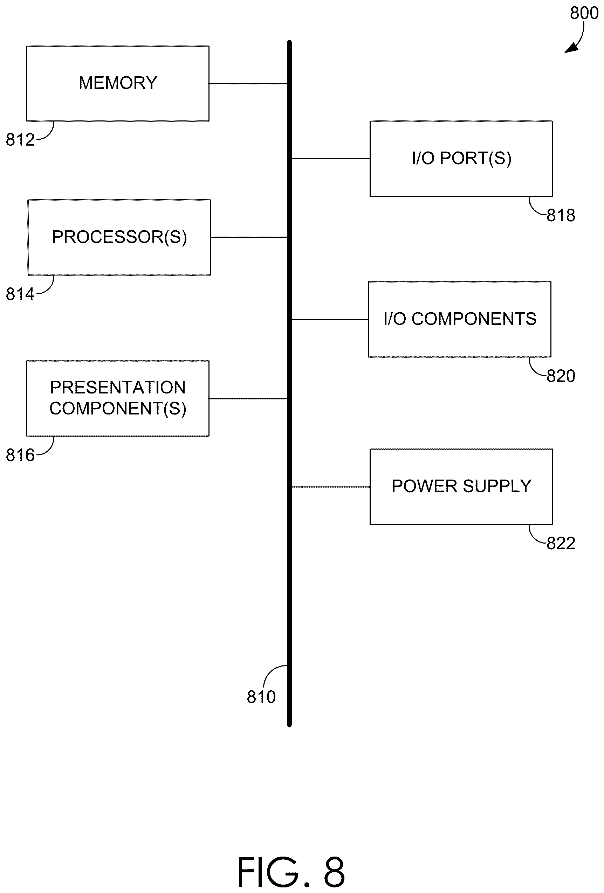

Having briefly described an overview of embodiments of the present technical solution, an example operating environment in which embodiments of the present technical solution may be implemented is described below in order to provide a general context for various aspects of the present technical solution. Referring initially to FIG. 8 in particular, an example operating environment for implementing embodiments of the present technical solution is shown and designated generally as computing device 800. Computing device 800 is but one example of a suitable computing environment and is not intended to suggest any limitation as to the scope of use or functionality of the technical solution. Neither should computing device 800 be interpreted as having any dependency or requirement relating to any one or combination of components illustrated.

The technical solution may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform particular tasks or implement particular abstract data types. The technical solution may be practiced in a variety of system configurations, including hand-held devices, consumer electronics, general-purpose computers, more specialty computing devices, etc. The technical solution may also be practiced in distributed computing environments where tasks are performed by remote-processing devices that are linked through a communications network.

With reference to FIG. 8, computing device 800 includes bus 810 that directly or indirectly couples the following devices: memory 812, one or more processors 814, one or more presentation components 816, input/output ports 818, input/output components 820, and illustrative power supply 822. Bus 810 represents what may be one or more buses (such as an address bus, data bus, or combination thereof). The various blocks of FIG. 8 are shown with lines for the sake of conceptual clarity, and other arrangements of the described components and/or component functionality are also contemplated. For example, one may consider a presentation component such as a display device to be an I/O component. Also, processors have memory. We recognize that such is the nature of the art, and reiterate that the diagram of FIG. 8 is merely illustrative of an example computing device that can be used in connection with one or more embodiments of the present technical solution. Distinction is not made between such categories as "workstation," "server," "laptop," "hand-held device," etc., as all are contemplated within the scope of FIG. 8 and reference to "computing device."

Computing device 800 typically includes a variety of computer-readable media. Computer-readable media can be any available media that can be accessed by computing device 800 and includes both volatile and nonvolatile media, removable and non-removable media. By way of example, and not limitation, computer-readable media may comprise computer storage media and communication media.

Computer storage media include volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 800. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 812 includes computer storage media in the form of volatile and/or nonvolatile memory. The memory may be removable, non-removable, or a combination thereof. Exemplary hardware devices include solid-state memory, hard drives, optical-disc drives, etc. Computing device 800 includes one or more processors that read data from various entities such as memory 812 or I/O components 820. Presentation component(s) 816 present data indications to a user or other device. Exemplary presentation components include a display device, speaker, printing component, vibrating component, etc.

I/O ports 818 allow computing device 800 to be logically coupled to other devices including I/O components 820, some of which may be built in. Illustrative components include a microphone, joystick, game pad, satellite dish, scanner, printer, wireless device, etc.

## ADDITIONAL STRUCTURAL AND FUNCTIONAL FEATURES OF EMBODIMENTS OF THE TECHNICAL SOLUTION

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described in the paragraphs below may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the technical solution is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present technical solution are described with reference to a distributed computing environment; however the distributed computing environment depicted herein is merely exemplary. Components can be configured for performing novel aspects of embodiments, where the term "configured for" can refer to "programmed to" perform particular tasks or implement particular abstract data types using code. Further, while embodiments of the present technical solution may generally refer to the technical solution environment and the schematics described herein, it is understood that the techniques described may be extended to other implementation contexts.

For purposes of this disclosure the word "support" refers to provisioning of functionality, services, or assistance by a computing component or through computing operations within a broader computing system. When a computing component or set of operations supports a specific functionality, it means that it plays a role in enabling or executing that particular aspect of the computing system. This support can manifest in various ways, including the processing of data, execution of operations, management of resources, and ensuring compatibility or interoperability with other components. Additionally, support may involve providing interfaces, APIs (Application Programming Interfaces), or protocols that allow seamless interaction and integration with other elements of the computing system. The concept of support extends beyond mere functionality provision to encompass maintenance, troubleshooting, and the overall optimization of computing resources to ensure the robust and efficient operation of the computing system.

Embodiments of the present technical solution have been described in relation to particular embodiments which are intended in all respects to be illustrative rather than restrictive. Alternative embodiments will become apparent to those of ordinary skill in the art to which the present technical solution pertains without departing from its scope.

From the foregoing, it will be seen that this technical solution is one well adapted to attain all the ends and objects hereinabove set forth together with other advantages which are obvious and which are inherent to the structure.

It will be understood that certain features and sub-combinations are of utility and may be employed without reference to other features or sub-combinations. This is contemplated by and is within the scope of the claims.

According to one aspect disclosed herein there is provided a computerized system as set out in any of the system claims.

According to another aspect disclosed herein, there is provided a computer-implemented method as set out in any of the method claims. In further embodiments of the method, the executing of the plurality of local analysis operations may comprise: accessing historical data associated with a flagged payload item; identifying metrics associated with command-line contextual factors of the flagged payload item; using the metrics, generating a historical baseline for the flagged payload; and generating a local context based on the historical baseline for the flagged payload item. Alternatively or additionally, the executing of the plurality of local analysis operations may comprise: executing multi-factor anomaly scoring, wherein multi-factor anomaly scoring employs an isolation forest anomaly detection model to analyze command-line contextual factors for identifying deviations from an established baseline.

According to another aspect disclosed herein, there are provided are or more computer-storage media having computer-executable instructions embodied thereon in accordance with the independent storage medium/media claim. In embodiments thereof, the operations may further comprise: receiving an indication to execute a remediation action associated a flagged item classified as a TP; and communicating the indication to execute the remediation action to cause execution of the remediation action. Alternatively or additionally, the operations may further comprise: periodically updating thresholds and baselines using recent data patterns of command-lines; incorporating feedback to refine anomaly detection criteria and scoring models; and employing a weighted scoring approach that integrates the feedback. In some such embodiments, TPs may be communicated for investigation and remediation; BPs may be communicated for review and compliance checks; and LCs may be discarded.

## Claims

1. A computerized system comprising:

   one or more computer processors; and
   computer memory storing computer-useable instructions that, when used by the one or more computer processors, cause the one or more computer processors to perform operations, the operations comprising:

   accessing (302) command-line data associated with a first command-line;
   generating (304) an anomaly score for the first command-line, wherein the anomaly score quantifies unusual characteristics of the first command-line;
   determining (306) a local context associated with the first command-line, wherein the local context is determined based on historical data corresponding to the first command-line;
   based on the anomaly score and the local context, generating (308) a security insight for the first command-line; and
   communicating (310) the security insight to a security management client.

2. The system of claim 1, wherein the command-line data is a payload item that is generated based on concatenating fields associated with the first command-line.

3. The system of claim 1, wherein the security insight is associated with an anomaly detection engine, the anomaly detection engine is associated with an analysis framework comprising data processing, global analysis, local analysis, and combining of results of both global analysis and local analysis.

4. The system of claim 3, wherein the anomaly detection engine comprises an anomalous command-line detector the enables data pre-processing, global analysis, local analysis, and an application engine that enables combining the results, triaging anomalies, generating alerts and human-in-the-loop validation, and a feedback loop for fine-tuning the models.

5. The system of claim 3, wherein the anomaly detection engine supports detecting anomalous command-lines using a plurality of unusual command-line types that define possible types of anomalous command-lines and command-line metadata that define command-line contextual factors.

6. The system of claim 1, wherein generating the usualness score is based on global analysis comprising applying a BM25 function to rank command-line parameters by relevance or a Log Entropy function to assess irregularity of command-line parameters; and determining the local context is based on local analysis that examines typical usage patterns to determine whether command-lines are within expected behavior for a given asset or user.

7. The system of claim 1, the operations further comprising employing a dynamic threshold selection to dynamical compute thresholds to classify anomaly scores to high- , medium-, or low- severity categories based on deviations from the mean.

8. The system of claim 1, the operations further comprising:

   communicating, from a security management client, a request for a security posture of a computing environment;
   based on communicating the request, receiving a security posture visualization comprising a security insight associated with the first command-line, wherein the security insight identifies the first command-line as a true positive, a benign positive, or a legitimate command; and
   causing display of the security posture visualization.

9. The system of claim 8, the operations further comprising:

   receiving an indication to execute a remediation action associated with the security insight; and
   communicating the indication to execute the remediation action to cause execution of the remediation action.

10. A computer-implemented method, the method comprising:

   accessing (402) command-line data associated with a plurality of command-lines, wherein the command-line data is associated with a computing environment;
   executing (404) a plurality of global analysis operations to flag anomalies associated with the computing environment;
   executing (406) a plurality of local analysis operations to differentiate benign positive command-lines from true positive command-lines;
   based executing the plurality of global analysis operations and the plurality of local analysis operations, generating (408) one or more security insights; and
   communicating (410) the one or more security insights to a security management client.

11. The method of claim 10, wherein the executing the plurality of global analysis operations comprises:

   applying 1-gram tokenization to identify unusual parameters;
   applying 2-gram tokenization to detect rare or suspicious combinations of parameters;
   converting 1-gram tokens into corresponding numerical formats via text vectorization using a CountVectorizer model; and
   converting 2-gram tokens into corresponding numerical formats via text vectorization using the CountVectorizer model.

12. The method of claim 10, wherein the executing the plurality of global analysis operations comprises:

   analyzing statistical properties of anomaly scores associated with payload items of the command-line data, wherein the statistical properties include mean and standard deviation; and
dynamically computing thresholds to classify the anomaly scores into high-, medium-, or low-severity categories based on deviations from the mean.

13. The method of claim 10, wherein the executing the plurality of global analysis operations comprises:

identifying payload items of the command-line data that meet high- or medium-severity criteria based on either BM25 or Log Entropy scores;
discarding low-severity anomalies to reduce false positives;
forwarding flagged payload items with high- and medium-severity anomaly scores for local analysis.

14. The method of claim 10, wherein the executing the plurality of global analysis operations comprises:

employing a dynamic threshold selection to dynamical compute thresholds to classify anomaly scores to high-, medium-, or low- severity categories based on deviations from the mean; and
flagging one or more command-lines for local analysis based the one or more command-lines having a high- or medium- severity.

15. One or more computer-storage media having computer-executable instructions embodied thereon that, when executed by a computing system having a processor and memory, cause the processor to perform operations, the operations comprising:

accessing (502) a plurality of flagged payload items associated with corresponding global analysis results and local analysis results;
based on the corresponding global analysis results and local analysis results, generating (504) classifications for the flagged payload items, the classifications are selected from the following: True Positives (TP), Benign Positives (BP), or Legitimate Commands (LC); and
communicating (506) the flagged payload items based on workflows associated with the classifications.

100

**ANOMALOUS COMMAND-LINE DETECTOR 100_1A**

102A JOB TRIGGER

104A PROCESS TELEMETRY

Extract for defined period of time — 106A

108A EVENT TYPE FILTER — E.G., EVENT ID

110A DATA PRE-PROCESSING
- 112A DATA CLEANING
- 114A FEATURE CURATION

**GLOBAL ANALYSIS 120A**

122A N-GRAM TOKENIZATION
- 1-GRAM TOKENIZATION
- 2-GRAM TOKENIZATION

124A
- TEXT VECTORIZATION → LOG ENTROPY
- TEXT VECTORIZATION → BM25

ENSEMBLE OF STATISTICAL MODELS

126A COMMAND LINE ANOMALOUS SCORE, MODEL SOURCE AND SCORE CONTRIBUTORS

RESULTS W/ EXPLANATION

128A DYNAMIC THRESHOLD SELECTION

129A FILTER UNUSUAL/ ANOMALOUS COMMAND LINES

ALL ANOMALIES ARE NOT MALICIOUS

**LOCAL ANALYSIS 130A**

READS HISTORICAL PERIOD OF PROCESS DATA FOR FLAGGED COMMANDS

EXECUTION STATS GENERATION

MULTI-FACTOR ANOMALY SCORER

FLAG GOOD & MALICIOUS ANOMALY

S1 DATALAKE STORAGE

LEGEND
——— CURRENT SCOPE

A

B

**FIG. 1A**

FIG. 1A

(continued)

PROCESS TELEMETRY → EVENT TYPE FILTER → DATA CLEANING → FEATURE CURATION → 2-GRAM TOKENIZATION

EVENT ID: 4688

TEXT VECTORIZATION

100B

FOR EACH TOKEN

CALCULATE TERM FREQUENCY SCORE

CALCULATE INVERSE DOCUMENT FREQUENCY SCORE

CALCULATE BM25 SCORE

CALCULATE BM25 SCORE OF PAYLOAD_ITEM

FIG. 1B

EP 4 752 764 A1

PROCESS TELEMETRY → EVENT TYPE FILTER → DATA CLEANING → FEATURE CURATION → 1-GRAM TOKENIZATION

EVENT ID: 4688

→ TEXT VECTORIZATION →

**100C**

FOR EACH TOKEN

CALCULATE TERM FREQUENCY SCORE     CALCULATE GLOBAL TERM FREQUENCY SCORE

→ CALCULATE LOG ENTROPY WEIGHT

→ CALCULATE LOG ENTROPY SCORE OF PAYLOAD_ITEM

FIG. 1C

FIG. 1D

FIG. 2A

FIG. 2B

302 — ACCESS COMMAND-LINE DATA ASSOCIATED WITH A FIRST COMMAND-LINE

304 — GENERATE AN ANOMALY SCORE FOR THE FIRST COMMAND-LINE

306 — DETERMINE A LOCAL CONTEXT ASSOCIATED WITH THE FIRST COMMAND-LINE

308 — GENERATE A SECURITY INSIGHT FOR THE FIRST COMMAND-LINE

308 — COMMUNICATE THE SECURITY INSIGHT TO A SECURITY MANAGEMENT CLIENT

# FIG. 3

400

| 402 | ACCESS COMMAND-LINE DATA ASSOCIATED WITH A PLURALITY OF COMMAND-LINES |

| 404 | EXECUTE A PLURALITY OF GLOBAL ANALYSIS OPERATIONS TO FLAG ANOMALIES ASSOCIATED WITH THE COMPUTING ENVIRONMENT |

| 406 | EXECUTE A PLURALITY OF LOCAL ANALYSIS OPERATIONS TO DIFFERENTIATE BENIGN POSITIVE COMMAND-LINES FROM TRUE POSITIVE COMMAND-LINES |

| 408 | GENERATE ONE OR MORE SECURITY INSIGHTS |

| 410 | COMMUNICATE THE ONE OR MORE SECURITY INSIGHTS TO A SECURITY MANAGEMENT CLIENT |

FIG. 4

500

502 — ACCESS A PLURALITY OF FLAGGED PAYLOAD ITEMS ASSOCIATED WITH CORRESPONDING GLOBAL ANALYSIS RESULTS AND LOCAL ANALYSIS RESULTS

504 — GENERATE CLASSIFICATIONS FOR THE FLAGGED PAYLOAD ITEMS, THE CLASSIFICATIONS ARE SELECTED FROM THE FOLLOWING: TRUE POSITIVES (TP), BENIGN POSITIVES (BP), OR LEGITIMATE COMMANDS (LC)

506 — COMMUNICATE THE FLAGGED PAYLOAD ITEMS BASED ON WORKFLOWS ASSOCIATED WITH THE CLASSIFICATIONS

# FIG. 5

600

SECURITY MANAGEMENT SYSTEM
610

SECURITY MANAGEMENT ENGINE
620

SECURITY MANAGEMENT RESOURCES
630

MACHINE LEARNING ENGINE
640

MACHINE LEARNING DATA
642

MACHINE LEARNING
MODELS
644

NETWORK
600A

SECURITY MANAGEMENT
CLIENT
650

SECURED COMPUTING
ENVIRONMENT
660

FIG. 6

700

CLIENT DEVICE
780

FABRIC
CONTROLLER
740

HOST
750

VIRTUAL
MACHINE
752

VIRTUAL
MACHINE
754

NODE 730

RESOURCES
760

RACK 720

CLOUD COMPUTING PLATFORM 710

FIG. 7

800

MEMORY

812

PROCESSOR(S)

814

PRESENTATION
COMPONENT(S)

816

810

I/O PORT(S)

818

I/O COMPONENTS

820

POWER SUPPLY

822

FIG. 8

## EUROPEAN SEARCH REPORT

**Application Number**

EP 25 21 3944

Europäisches Patentamt
European Patent Office
Office européen des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 275 831 B1 (AOUAD LAMINE [FR] ET AL) 15 March 2022 (2022-03-15) * column 4 - column 8; figures 1-7 * ----- | 1-15 | INV. G06F21/50 G06F21/55 G06F40/205 H04L9/40 |
| X | US 2023/096895 A1 (STOKES III JACK WILSON [US] ET AL) 30 March 2023 (2023-03-30) * paragraph [0035] - paragraph [0082]; figures 1-6 * ----- | 1-15 | |
| A | US 2024/031403 A1 (POSPELOVA MARIA [CA] ET AL) 25 January 2024 (2024-01-25) * paragraph [0048] - paragraph [0065]; figures 1-3 * ----- | 1-15 | |
| A | EP 4 339 817 A1 (CROWDSTRIKE INC [US]) 20 March 2024 (2024-03-20) * paragraph [0011] - paragraph [0080]; figures 1-4 * ----- | 1-15 | |

**TECHNICAL FIELDS SEARCHED (IPC)**

G06F
H04L

The present search report has been drawn up for all claims

| Place of search | Date of completion of the search | Examiner |
|---|---|---|
| Munich | 14 April 2026 | Wissing, Julio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 3944

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2026

| Patent document cited in search report | | Publication date | Patent family member(s) | | Publication date |
|---|---|---|---|---|---|
| US 11275831 | B1 | 15-03-2022 | NONE | | |
| US 2023096895 | A1 | 30-03-2023 | EP | 4409449 A1 | 07-08-2024 |
| | | | US | 2023096895 A1 | 30-03-2023 |
| | | | WO | 2023055517 A1 | 06-04-2023 |
| US 2024031403 | A1 | 25-01-2024 | NONE | | |
| EP 4339817 | A1 | 20-03-2024 | EP | 4339817 A1 | 20-03-2024 |
| | | | US | 2024095346 A1 | 21-03-2024 |

EPO FORM P0459

For more details about this annex : see Official Journal of the European Patent Office, No. 12/82

**REFERENCES CITED IN THE DESCRIPTION**

**Patent documents cited in the description**

- US 45140523